# EUROPÄISCHE PATENTSCHRIFT

(11) **EP 0 917 620 B1**
(45) Veröffentlichungstag und Bekanntmachung des Hinweises auf die Patenterteilung: **17.05.2000**
(21) Anmeldenummer: 97936696.0
(22) Anmeldetag: 08.08.1997
(51) Int. Cl.: F02B 75/02, F02B 47/02

(54) **BRENNKRAFTMASCHINE MIT ERWEITERTEM ARBEITSZYKLUS**
INTERNAL COMBUSTION ENGINE WITH EXTENDED WORKING CYCLE
MOTEUR A COMBUSTION A CYCLE DE TRAVAIL ELARGI

(30) Priorität: 09.08.1996 DE 19632179
(43) Veröffentlichungstag der Anmeldung: 26.05.1999
(73) Patentinhaber: De Clercq, Ludo, B-1120 Brussel (BE)
(72) Erfinder: De Clercq, Ludo, B-1120 Brussel (BE)
(74) Vertreter: Wasmeier, Alfons, Dipl.-Ing.
(86) Internationale Anmeldenummer: EP9704343
(87) Internationale Veröffentlichungsnummer: WO9806935

(56) Entgegenhaltungen:
- EP-A- 0 079 736
- DE-A- 2 925 091
- DE-U- 29 512 280
- GB-A- 1 531 492
- PATENT ABSTRACTS OF JAPAN vol. 010, no. 002 (M-444), 8.Januar 1986 & JP 60 166746 A (KURARAY KK), 30.August 1985,

## Beschreibung

Die Erfindung betrifft Brennkraftmaschinen nach dem Oberbegriff des Anspruches 1.

Derartige Brennkraftmaschinen spielen in der modernen Industrie eine überragende Rolle. Während Brennkraftmaschinen, z.B. Dampfturbinen und Kernreaktoren kombiniert mit Turbinen in der elektrischen Energieerzeugung einen erheblichen Anteil haben, sind sie auf große Anlagen beschränkt und stellen nur einen geringen Teil der installierten Energie dar.Umweltaktivisten favorisieren sehr stark die Stirling-Maschine, aber obwohl diese vom thermodynamischen Standpunkt aus vernünftig ist, kann sie derzeit mit den vorstehend angegebenen Maschinen in Hinblick auf den mechanischen Wirkungsgrad oder die Energiedichte nicht konkurieren.

Die heutigen Brennkraftmaschinen können nur innerhalb eines sehr begrenzten Bereiches von Leistungsdichte, Wirkungsgrad und Maschinenlebensdauer betrieben werden. Sie sind stark abhängig von der Maschinengröße (Leistung, Zylindervolumen), Maschinendrehzahl, Brennstoffart und Konstruktionsmaterialien. In bezug auf den Anwendungsfall, z.B. Kraftfahrzeugantriebe, Bootsantriebe, Flugzeugantriebe, Antriebe für die elektrische Energieerzeugung, Pumpenantriebe und dergl. werden bevorzugt Kolbenmaschinen mit Selbstzündung (Diesel) oder Fremdzündung mittels Zündkerze (Otto-Motoren) oder Turbinenmotoren (Rankine, Brayton oder gemischer Zyklus) oder eine Kombination hiervon eingesetzt. Jede Maschinenart hat ihre eigenen, begrenzten Betriebsbereiche und ihren bevorzugten Einsatzbereich. Die Erweiterung dieser Betriebsbedingungen bzw. des Einsatzbereiches war Gegenstand umfangreicher Untersuchungen und Entwicklungen seit Erfindung der Brennkraftmaschinen. Dabei wurden Fortschritte aufgrund weiterentwickelter Konstruktionsmaterialien, einer verbesserten Steuerung der Verbrennung, effektiverer Brennstoffe, Gewichtsreduzierungen, besserer Motorkühlung, stromlinienförmiger Strömungswege, verbesserter Ventilsteuerung und rezent computergestützter Motorsteuerung erreicht. Insgesamt gesehen sind jedoch die Fortschritte bei der Entwicklung in Hinblick auf verbesserte Leistungsdichte, Wirkungsgrad und Maschinenlebensdauer eher bescheiden geblieben. Der höchste Wirkungsgrad kommerzieller Maschinen beträgt derzeit bei 2300 U/min etwa 44% oder 8,2 MJ/kWh oder 144 g Gasoil/Hph oder 192 g Gasoil/kWh (10200 cal/g = 42,707 J/g). Die derzeit mit langsam laufenden Maschinen erzielbaren höchsten Wirkungsgrade (z.B. Sulzer Zweitakt-Diesel mit 76 U/min) liegen in der Größenordnung von 50%.

Die Verwendung von Wasser in Verbindung mit Äthanol ist mit beschränktem Erfolg von Gunnermann (WO 91/07579) versucht worden. Gunnermann hat wässrige Alkohole mit 40 und 60%iger Verdünnung mit Wasser verwendet. Er hat festgestellt, daß ein teuerer und aufwendiger Platinkatalysator innerhalb der Verbrennungskammer erforderlich wurde, um die Einleitung der Verbrennung zu unterstützen, indem die Wasserstoffbindungen im Brennstoffgemisch aktiviert wurden. Gunnermann hat den hohen Brennstoffwirkungsgrad fälschlicherweise als zusätzliche Wärmefreigabe, die durch dissoziiertes Wasser verursacht wurde, interpretiert. Ein einfacher Wärmeabgleich zeigt, daß dies nicht zutrifft, weil die von der Wasserstoff-Sauerstoff-Kombination freigesetzte Wärme gleich der Wärme ist, die bei der Dissoziation absorbiert wird. Nur der Pt-Wert ermöglicht eine Zündung in Gemischen, die sonst zum Zünden zu feucht wären. Gunnermann's Maschine hat jedoch Stabilitäts- und Zuverlässigkeits-, aber auch Kostenprobleme ergeben und war begrenzt auf ein Wasser-Brennstoff-Verhältnis von 1,5:1.

Die Verwendung eines Zyklus-Erweiterungsfluids ist in begrenztem Ausmaß in Gasturbinen praktiziert worden. Das Injizieren von Dampf in die Verbrennungskammer, das ursprünglich beabsichtigt war, um eine Rußbildung zu reduzieren und den Verbrennungsvorgang zu fördern, ergab eine erhöhte Leistungsabgabe der Turbine und eine Verbesserung des Wirkungsgrades. Weitergehende Untersuchungen vieler Erfinder, führten zu der sogenannten SAGT oder Steam-Augmented Gas Turbine. Die SAGT arbeitet mit Dampfinjektion hinter der Verbrennungskammer. Auf diese Weise kann die Temperatur nach der Verbrennung auf einen wesentlich höheren Wert angehoben werden als die Expansions- turbine aushalten kann, und die Dampfinjektion senkt die Temperatur wieder auf einen Wert, der für die Expansionsturbine akzeptabel ist, und wandelt die Wärme in großes Volumen um. Die SAGT ist weiter verbessert und ein "CHENG-Punkt" definiert worden, bei dem die Effizienz der SAGT dadurch ein Maximum wird, daß gesättigter Dampf in exakt der Menge injiziert wird, die durch Rückgewinnung von Wärme aus den Auspuffgasen erzeugt werden kann. Der CHENG-Punkt entspricht jedoch nicht einer stöchiometrischen Verbrennung, da überschüssiger Sauerstoff vorhanden ist.

Ein weiterer Schritt wurde von Urbach & Knauss getan, die die SAGT auf stöchiometrische Verbrennungsbedingungen gebracht haben und eine höhere Leistungsdichte auf Kosten eines geringfügig niedrigeren Wirkungsgrades in Kauf genommen haben. Urbach & Knauss haben dies dadurch erreicht, daß sie eine erste Brennkammer mit hohem Druck betrieben haben, an die sich eine Dampfinjektion mit nachfolgender Expansion auf einen Zwischendruck angeschlossen hat. Auf diese Weise wurden die Verbrennungsgase sowohl durch Dampfinjektion als durch teilweise Expansion gekühlt. Eine zweite Brennkammer verbrauchte den verbleibenden Sauerstoff, und es folgte eine Dampfinjektion und eine Endexpansion. Urbach & Knauss sind jedoch auf diesem Entwicklungsstadium stehen geblieben.

Das Zyklus-Erweitungsfluid kann vorteilhafterweise als Träger für die Verbrennung fördernde Chemikalien verwendet werden. Zusätze von Peroxiden zum Brennstoff waren bereits Lindström bekannt (WO 88/03550), um den Gehalt an CO- und HC-Restbeständen in den Auspuffgasen zu reduzieren. Das Hinzufügen von Peroxiden zum Zyklus-Erweiterungsfluid eliminiert Misch-, Speicher- und Shelf-Life-Probleme von sonst mit Peroxid gedopten Brennstoffen.

Die DE 21 27 957 B2 offenbart ein System zum Injizieren eines Antiklopf-Fluids, das Wasser sein kann, um die Verbrennungstemperatur zu verringern. Das Fluid wird vor dem Kompressionsschritt injiziert, so daß Kompressionsenergie eingespart werden kann und die Gefahr eines vorzeitigen Zündens (Klopfen) durch Absenken der Temperaturen nach der Kompression (d.h. vor der Zündung) reduziert wird. Es läßt sich hieraus kein Hinweis darauf entnehmen, daß mehr Brennstoff in den gleichen Zyklus eingeführt oder eine isochorische Verbrennung werden soll. Eine derartige Maschine ist eine herkömmliche Brennkraftmaschine, unabhängig von einer Schichtladung, Turboladung, einem Otto-, Diesel- oder vergleichbaren Zyklus, oder vom Vorhandensein von sekundären oder Mehrfach-Brennstoffinjektoren.

Die DE 43 01 887 A1 führt insbesondere aus, daß das Hinzufügen von Wasser oder einem anderen Sekundärfluid auf der Verwendung von Abwärme aus dem traditionellen Verfahren zur Verdampfung basiert, was zu einer allgemeinen Herabsetzung von Temperaturen und damit zu einer Verringerung der Verunreinigung mit z.B. NOₓ führt. Dabei muß entweder das Wasser vorgeheizt oder in Dampf umgewandelt werden, indem Abwärme aus den Abgasen wiederverwendet wird (was für Gasturbinen innerhalb sehr enger Grenzen möglich ist, jedoch für Kolbenmotoren aufgrund der sehr hohen Drücke und der für die Injektion zur Verfügung stehenden Zeit praktisch unmöglich ist), oder es muß das Wasser in flüssiger Form auf heiße Oberflächen innerhalb des Zylinders aufgebracht werden, ohne daß jedoch Wärme aus dem verbrannten Luft-Brennstoff-Gemisch entnommen wird (auch in sehr geringer Menge). Dies zeigt, daß hierbei die Möglichkeit des Injizierens von mehr Brennstoff pro Zyklus nicht in Betracht gezogen ist.

Die Verwendung mehrerer Brennstoffinjektoren in einer Brennkammer ist im Stand der Technik bekannt, jedoch stets für unterschiedliche Zwecke als bei vorliegender Erfindung. Typischerweise werden Mehrfach-Injektoren für Kolben mit sehr großen Bohrungen verwendet, bei denen eine Reduzierung des Mischabstandes erwünscht ist. Der Grund für die wahlweise Verwendung von Mehrfach-Brennstoffinjektoren nach vorliegender Erfindung besteht darin, daß eine stufenweise Brennfolge erwünscht sein kann, die bei Verwendung eines einzelnen Injektors schwierig oder unmöglich zu realisieren und/oder zu steuern ist. Nach der Erfindung können unterschiedliche Brennstoffe in unterschiedlichen Injektoren verwendet werden, so daß z.B. die Verbrennung durch Verwendung eines Brennstoffs hoher Qualität im ersten Injektor eingeleitet wird, und sich daran die Verbrennung von Brennstoffen mit geringerer Qualität oder mit Wasser oder mit anderen Chemikalien gemischter Brennstoffe in den anderen Injektoren anschließt. Die Erfindung liegt in der Awendung der Injektoren.

Aus der US 54 00 746 A ist die Verwendung von Wasserstoffperoxid als Zusatz zum herkömmlichen Brennstoff zum Zweck der Reduzierung der Verbrennungsspitzentemperatur bekannt. Dies ist hier erforderlich, weil nicht erkannt worden ist, daß es möglich ist, die Effizienz der Verbrennung durch Injizieren ausreichenden Brennstoffs und durch das Timing einer Injektion von Wasser zu verbessern. Diese bekannte Methode führt dazu, daß die Flamme bei der Injektion von Wasser gelöscht wird. Die einzige Möglichkeit besteht in einer Sauerstoffanreicherung oder einer Sauerstoffaddition durch Verwendung von Wasserstoffperoxid. Die Lehre, zusätzlichen Sauerstoff anzuwenden, der verfügbar ist, um mehr Brennstoff zu injizieren und mehr Leistung aus jedem Zyklus herauszuholen, ist hieraus nicht entnehmbar.

Mit der DE 29 25 091 A1 wird eine Verbrennungskraftmaschine mit offenem Kreislauf vorgeschlagen, bei der Verbrennungsluft isotherm in einem Kompressionsraum verdichtet, mit eingespritztem Brennstoff verbrannt und die Verbrennungsgase vor dem Ausstoßen isotherm entspannt werden. Eine Wassereinspritzung erfolgt in solcher Menge und Weise, daß das Wasser während der Kompression der Verbrennungsluft verdampft wird. Hierbei wird das injizierte Wasser nicht zur Verringerung der Verbrennungstemperatur und zur Erhöhung der Menge des Brennstoffes, der pro Lufteinheit umgewandelt werden kann, verwendet, sondern es wird die Injektion von Wasser in solcher Menge und Weise als Teil des Kompressionszyklus durchgeführt, daß eine teilweise isothermische Kompression erreicht wird. Daran schließt sich eine adiabatische isentropische Kompression auf außergewöhnlich hohe Drücke an, so daß die durch Kompression entstehende Hitze Temperaturen über 800°C erreichen kann. Die Verbrennung wird dann während der Expansionsphase kontinuierlich durchgeführt, so daß eine annähernd isothermische Expansion erreicht wird, wobei dieser Teil der Kompression einem Carnot-Teil des Zyklus entspricht.

Aufgabe der Erfindung ist es demgegenüber, den Bereich von Leistungsdichte, Wirkungsgrad und Maschinenlebensdauer über die Werte herkömmlicher Maschinen und Motoren hinaus zu erweitern.

Dies wird gemäß der Erfindung bei einer gattungsgemäßen Brennkraftmaschine mit den Merkmalen des Kennzeichens des Anspruches 14, 15 oder 16 bzw. mit einem Verfahren mit den Merkmalen des Kennzeichens des Anspruches 1 erreicht. Weitere Ausgestaltungen der Erfindung sind Gegenstand der Unteransprüche.

Mit vorliegender Erfindung wird grundsätzlich vorgeschlagen, Wasser oder ein anderes chemisch inertes oder endothermisch zerlegbares Fluid zu verwenden, und in die Verbrennungskammer(n) zu leiten, um damit eine größere Brennstoffmenge pro Zyklus zur Verfügung zu stellen und dadurch die Arbeitsleistung von Brennkraftmaschinen zu verbessern. Das hierfür verwendete Fluid ist ein Sekundärfluid, das als Zyklus-Erweiterungsfluid (ZEF) bezeichnet wird. Dieses Fluid ermöglicht es, ein ähnliches oder höheres Brennstoff-Luft-Verhältnis zu verwenden, ohne daß das Temperatur-Druck-Diagramm der Maschine, das für hohe Maschinenlebensdauer maßgeblich ist, nachteilig beeinflußt würde. Es wird dabei hohe Temperatur gegen erhöhten Druck und/oder erhöhtes Volumen ausgetauscht, indem eine zusätzliche Substanz verdampft und/oder endothermisch zerlegt wird. Diese Substanz ist vorzugsweise Wasser, weil es in beliebiger Menge zur Verfügung steht, leicht zu handhaben ist und keinerlei Umweltprobleme ergibt. Für spezielle Anwendungsfälle können jedoch auch andere Fluidzusätze verwendet werden.

Während die Verwendung von mit Sauerstoff angereicherter Verbrennungsluft oder sogar von reinem Sauerstoff, oder die Verwendung von sekundären, oxidierenden Substanzen, wie z.B. Nitro- oder Peroxy-Komponenten nur begrenzte Vorteile ergibt, weil wegen der Temperaturbegrenzungen nur ein geringer Teil der oxidierenden Substanz ausgenutzt werden kann und ein stöchiometrischer Betrieb ausgeschlossen ist, wird mit der Verwendung eines ZEF eine entscheidende Verbesserung erzielt, da im Vergleich zu herkömmlichen Anwendungen bis zur fünffachen Energiemenge pro Zyklus umgewandelt werden kann. Eine mit reinem Sauerstoff arbeitende Maschine kann ohne NOₓ-Emission und mit leicht steuerbarem CO₂-Auslaß betrieben werden, der auf einfache Weise für anschließende industrielle Nutzung gereinigt werden kann.

Nach der Erfindung wird Wasser in flüssiger oder gasförmiger Form in die Verbrennungskammer injiziert, um den Druck und/oder das Volumen zu erhöhen, während das Ansteigen der Temperatur des Arbeitsfluids verlangsamt oder die Temperatur stabilisiert oder verringert wird. Dies ermöglicht höhere Brennstoff-Luft-Verhältnisse, die sonst zu übermäßig hohen Temperaturen des Arbeitsfluids führen würden, was der hohen Maschinenlebensdauer abträglich wäre. Dabei kann auch Gas, Feststoff oder eine andere Flüssigkeit als Wasser in die Brennkammer injiziert werden, um den gleichen Effekt wie Wasser zu erreichen. Ein solches Medium soll entweder verdampfen und Wärme in großes Volumen oder hohen Druck umwandeln, oder soll eine endothermische Dissoziation ergeben, damit ein großes Volumen oder Partialdruck von Zersetzungsprodukten erreicht wird. Im Fall einer Gasturbine erfolgt die Verbrennung isobarisch, und das Fluid erzeugt ein großes Volumen. Bei einem Kolbenmotor verläuft die Verbrennung teilweise isochorisch, und das Fluid erzeugt einen hohen Druck.

Wasserinjektionswerte können bis zum 20fachen der Menge an benutztem Brennstoff betragen. Dies bedeutet, daß ein großes Wasserreservoir oder ein Wasserrückgewinnungssystem aus den Abgasen verwendet wird. Da die Abgase wesentlich kühler sind als dies bisher der Fall ist, kann dies mit sehr einfachen Mitteln erreicht werden, vorzugsweise durch Kühlen nahe dem Taupunkt unter Verwendung getrockneter Abgase in einem Wärmetauscher, und anschließendes Naßwaschen mit weiterer Kühlung im Waschwasserzyklus. Rückgewonnenes Wasser nimmt viele Restverunreinigungen auf, die in den Zyklus erneut eingeführt und verbrannt werden können.

Mit dieser Technik werden sehr hohe Leistungsdichten erzielt, weil mehr Energie in einen Arbeitszyklus bei gleichhohem oder niedrigerem theoretischem Zykluswirkungsgrad eingebracht werden kann, u.z. bei vergleichsweise gleichem oder besserem Gesamtwirkungsgrad der Umwandlung in mechanische Energie. im Falle einer Maschine mit Zündung mittels Zündkerzen können Arbeitsmaterialien geringen Umfangs verwendet werden, um Leistungsdichten, wie sie im Augenblick beispielsweise nur bei teueren Rennwagenmotoren zu erzielen sind, bei Motorlebensdauern, die herkömmliche Konstruktionen weit übersteigen, zu erreichen. Diese Technik ermöglicht auch, daß Maschinen mit Selbstzündung gleiche oder höhere Leistungsdichten als Maschinen mit Fremdzündung erzielen, weil die obere Temperaturgrenze aufgehoben wird. Bei Gasturbinen ist es mit dieser Technik möglich, Leistungsdichten um einen Faktor von 5 oder mehr zu steigern, weil die obere Temperaturgrenze aufgehoben wird (WO 94/28285). Bei dampfverstärkten Gasturbinen SAGT läßt sich ein verbesserter Wirkungsgrad erzielen, mit Maschinen nach Urbach & Knauss eine erhöhte Leistungsdichte. Letztere Maschinen haben die Bedingungen für GAST-Turbinen bis zur stöchiometrischen Verbrennung gebracht, die Optionen für das Arbeiten mit reduzierten Temperaturen, um den Vorteil einer verlängerten Maschinenlebensdauer zu erzielen, aber nicht erkannt, auch nicht das Potential für einen Betrieb mit Sauerstoffverstärkung oder reinem Sauerstoff erreicht. Die Begrenzung der Spitzentemperatur beim Einsatz von Fluiden ist in Hinblick auf die Reduzierung von NOₓ-Emissionen vom Umweltaspekt her von Bedeutung.

Geringe Beigaben von Wasser mit z.B. 0,01 % H₂O₂, O₃, organischen Peroxiden oder anderen oxidierenden Substanzen reicht aus, um Abgase in bezug auf Rest-CO und -HC zu reinigen. Die Beigabe von Peroxiden zu der Wasserbasis behebt Speicher- und Lebensdauer-Probleme von anderweitig mit Peroxid dotierten Brennstoffen. Geringe H₂O₂-oder O₃ - Beigaben können durch einfache On-line Elektrolyse des Wassers erzielt werden. Stärkere Konzentrationen von Peroxid können verwendet werden, um die Leistungsdichte weiter zu steigern, indem ein Teil der oxidierenden Substanz zugeführt wird.

Maschinen können mit durch Sauerstoff verstärkte Luft oder sogar mit reinem Sauerstoff betrieben werden. Letzteres würde zur Folge haben, daß die NOₓ-Bildung vollständig entfällt und daß sich Abgase ausschließlich aus CO₂ und Wasser ergeben. Wasser kann kondensiert und recycelt werden, CO₂ kann für industrielle Prozesse oder das Klimatisieren von Gewächshäusern oder dergl. verwendet werden.

Das Wasser kann auch mit wasserlöslichen oder in Wasser dispergierbaren Brennstoffen versetzt werden. Der Zündvorgang wird durch eine konzentrierte Brennstoffcharge erreicht, und der mit Wasser verdünnte Brennstoff kann dann in einer wässrigen Umgebung verbrannt werden. Der Grenzfall dieser Anwendung ist dann gegeben, wenn der gesamte Brennstoff in einer wässrigen Basis zugeführt wird, was dem Vorschlag von Gunnermann nahekommt, der wasserhaltige Alkohole in 40 und 60% wässriger Lösung vorgeschlagen und einen teuren Platinkatalysator in der Brennkammer benötigt hat, um die Einleitung der Verbrennung zu unterstützen, indem die Wasserstoffbindungen im Brennstoffgemisch aktiviert wurden. Der hohe Brennstoffwirkungsgrad für zusätzliche Wärmefreisetzung, die durch dissoziiertes Wasser verursacht wurde, wurde von Gunnermann nicht erkannt. Ein einfacher Wärmeabgleich zeigt, daß dies nicht zutrifft, weil die von der Wasserstoff/Sauerstoff-Kombination freigesetzte Wärme gleich der bei der Dissoziation absorbierten Wärme ist. Das Pt ermöglicht nur eine Zündung in Gemischen, die sonst für eine Zündung zu naß wären. Dabei ergab die Maschine nach Gunnermann Stabilitäts-, Zuverlässigkeits- und Kostenprobleme und war auf ein Wasser-Brennstoff-Verhältnis von 3:2 beschränkt, während mit vorliegender Erfindung erheblich höhere Werte erzielt werden können.

Mit der Erfindung wird erreicht, daß eine Brennkraftmaschine der gattungsgemäßen Art in einem Bereich von Leistungsdichte, Effizienz und Maschinenlebensdauer betrieben werden kann, wie dies bisher nicht möglich war. Dies wird dadurch erreicht, daß ein den Zyklus erweiterndes Fluid hinzugefügt wird und entweder die Menge an pro Zyklus hinzugefügtem Brennstoff erhöht oder der Zyklus in Richtung höherer Drücke modifiziert wird.

Nachstehend wird die Erfindung in Verbindung mit der Zeichnung anhand von Ausführungsbeispielen erläutert. Es zeigt:
- Fig. 1A - 1C: schematische Darstellungen von prinzipellen konstruktiven Ausführungsformen einer erfindungsgemäßen Brennkraftmaschine,

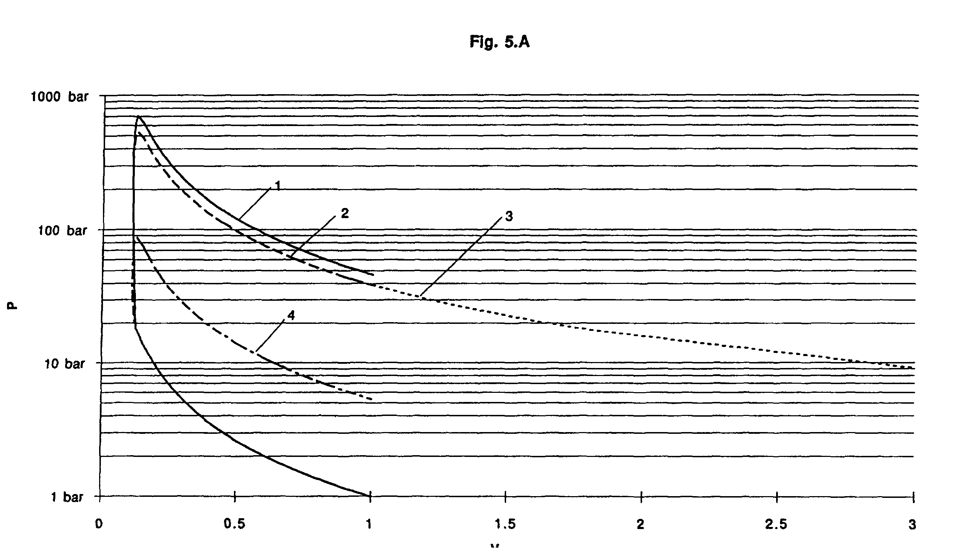

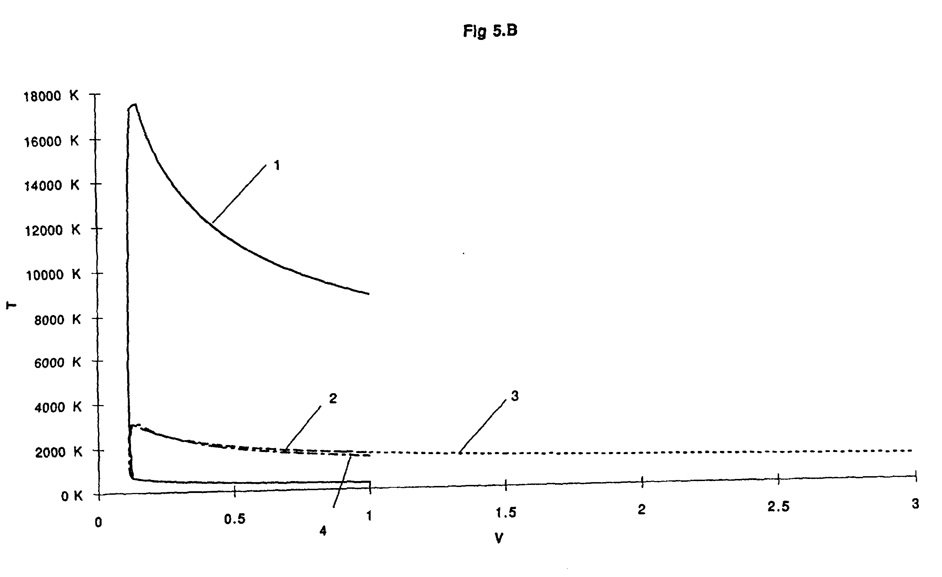

- Figuren 2 - 7: unterschiedliche Anwendungsfälle von P/V-Diagrammen (A) und T/V-Diagrammen (B) für Maschinen nach Figuren 1A - 1C, und
- Fig. 8: eine spezielle Ausführungsform der Erfindung in bezug auf die Bereitstellung des Zyklus-Erweiterungsfluids.

Bei der Ausführungsform nach Fig. 1A sind ein oder mehrere Brennkammern 1 mit Zylindern 2 und einer entsprechenden Anzahl von Kolben 3 durch eine Leitung 4 über Einlaßventile 5 mit Speisegas gespeist. Die bei der Verbrennung entstehenden Abgase werden über Auslaßventile 6 durch eine Abgasleitung 7 abgeführt. In die Brennkammer 1 wird Brennstoff über Vergaser 8 eingeführt, das Gas-Brennstoff-Gemisch wird in der Brennkammer 1 mittels Zündvorrichtung 9 gezündet. Über einen Injektor 10 wird ein Zyklus-Erweiterungsfluid, z.B. Wasser, Dampf oder dergl. in die Brennkammer 1 eingeführt. Des weiteren wird über sekundäre Injektoren 11 Brennstoff in die Brennkammer 1 eingespeist. Das Zyklus-Erweiterungsfluid wird aus einem Fluidspeicher 12, z.B. über eine Mischkammer 13, in der Brennstoff 14 und Peroxid 15 zugemischt werden können, mit Hilfe einer Fluidpumpe 16 und über einen wahlweise in die Abgasleitung 7 eingeschalteten Wärmetauscher 17 dem Injektor 10 zugeführt. Aus einer in die Abgasleitung 7 eingeschalteten Fluid-Sammelvorrichtung 18 kann das Zyklus-Erweiterungsfluid wahlweise anstatt aus dem Speicher oder der Zuführvorrichtung 12 entnommen werden. In die Speisegasleitung 4 kann eine Sauerstoff-Anreicherungsvorrichtung 19 bzw. ein Sauerstoffspeicherbehälter sein, über die das Speisegas mit Sauerstoff angereichert werden kann.

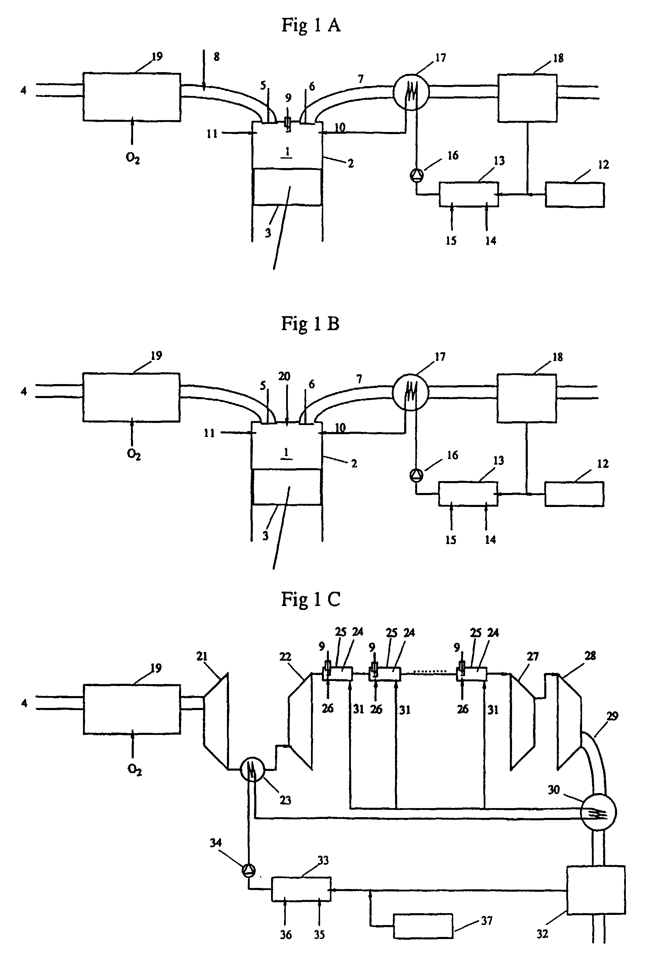

Die Ausführungsform nach Fig. 1 B unterscheidet sich von der nach Fig. 1 A im wesentlichen dadurch, daß der Vergaser entfällt und daß anstelle einer Zündvorrichtung 9 ein primärer Brennstoffinjektor 20 vorgesehen ist. Diese Ausführungsform betrifft eine Brennkraftmaschine mit Selbstzündung.

In Fig. 1C ist eine Ausführungsform der Erfindung dargestellt, die eine Turbinen-Brennkraftmaschine darstellt, bei der Speisegas über die Leitung 4 in Kompressorturbinenstufen 21, 22 eingeführt wird, der wahlweise mit einem Zwischenkühler 23 gekoppelt sein kann. Die Brennkammern sind mit 24 und die Zylinder mit 25 bezeichnet. Über Brennstoffinjektoren 26 wird Brennstoff in die Brennkammern 24 eingeleitet. Die Abgase aus den Brennkammern werden über Expansionsturbinenstufen 27, 28 an die Abgasleitung 29 und von dort an einen Wärmetauscher 30 abgegeben, der mit einer Fluidsammelvorrichtung 32 verbunden ist, die recycelbare ZEF abscheidet und in eine Mischkammer 33 leitet. In der Mischkammer 33 können Brennstoff 35 und Peroxid 36 zugemischt werden. Des weiteren ist ein ZEF-Speicher oder eine Zuführvorrichtung 37 vorgesehen, über die ZEF der Mischkammer 33 zugeführt wird. Die ZEF wird von einer Fluidpumpe 34 komprimiert, über Wärmetauscher 23 und 30 vorgeheizt und über Injektoren 31 verteilt in die Verbrennungskammer(n) injiziert.

Im Folgenden werden Ausführungsbeispiele 1 bis 13 für unterschiedliche Kolben-Brennkraftmaschinen anhand von Druck/Volumen-Zyklen und Temperatur/Volumen-Zyklen darstellenden Diagrammen erläutert. Kurve (1) stellt mit voll ausgezogenen Linien jeweils einen Zyklus einer in bekannter Weise ausgebildeten, unter stöchiometrischen Bedingungen arbeitenden Kolben-Brennkraftmaschine dar, mit Kurve (2) und Kurve (3) mit gestrichelten und anschließend punktierten Linien einen Zyklus einer Kolben-Brennkraftmaschine nach der Erfindung im normalen bzw. Überexpansionsbetrieb, und Kurve (4) mit strichpunktierten Linien einen konventionellen, unterstöchiometrisch arbeitenden Zyklus einer Kolben-Brennkraftmaschine mit Schichtladung bekannter Art dar.

### Beispiel 1:

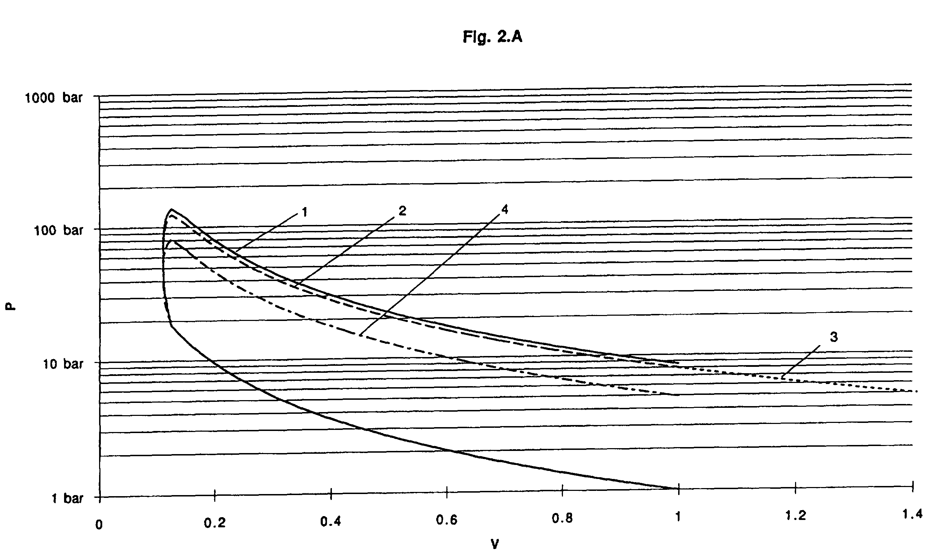

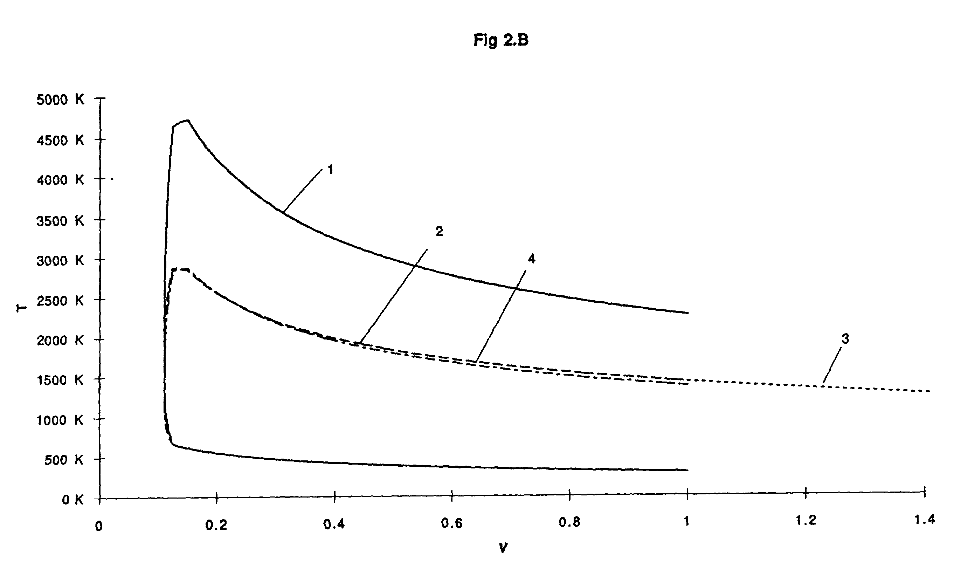

Fig. 2A zeigt das Druck/Volumen-Diagramm, Fig. 2B das Temperatur/Volumen-Diagramm eines bekannten fremdgezündeten Kolbenmotors. Kurve 1 gilt für den Betrieb unter herkömmlichen stöchiometrischen Bedingungen. Kurve 2 zeigt einen Zyklus des Kolbenmotors, der durch Injizieren eines Zyklus-Erweiterungsfluids nach der Erfindung verbessert wird, wobei dieses Fluid injiziert wird, um die Spitzentemperatur zu verringern, die während des Verbrennungs-Expansions-Zyklus erreicht wird, und trotzdem einen entsprechend hohen Druck in den Zylindern zu erreichen. Damit wird ein gleichhoher oder niedrigerer thermodynamischer Wirkungsgrad, jedoch ein besserer mechanischer Wirkungsgrad erzielt, was zu einem gleichhohen oder höheren Wirkungsgrad, gleicher oder höherer Motorleistungsdichte und gleicher oder höherer Motorlebensdauer führt. Die Betriebsbedingungen können so gewählt werden, daß entweder kleinere oder effektivere oder längerlebige Motoren erzielt werden.

### Beispiel 2:

Der Motor nach Beispiel 1 wird im (teilweisen) Atkinson-Zyklus (Überexpansion) betrieben, um den höheren Zylinderdruck, der nach einer herkömmlichen Expansion zur Verfügung steht, auszunutzen. Zyklus 1 ist gegenüber Beispiel 1 unverändert. Zyklus 2 + 3 zeigt den Betrieb des herkömmlichen, fremdgezündeten Kolbenmotors, der nach der Erfindung im Atkinson-Zyklus modifiziert ist. Dies führt zu einem höheren oder gleichhohen thermodynamischen Wirkungsgrad und zu einem höheren oder gleichhohen mechanischen Wirkungsgrad des Zyklus, was einen gleichhohen oder höheren Motorwirkungsgrad, gleichhohe oder höhere Motorleistungsdichte und gleichhohe oder höhere Motorlebensdauer ergibt. Auch hierbei können die Betriebsbedingungen so gewählt werden, daß entweder kleinere oder effizientere oder längerlebige Motoren erzielt werden.

### Beispiel 3:

Ein herkömmlicher fremdgezündeter Kolbenmotor wird unterstöchiometrisch unter geschichteten Ladungsbedingungen, verbessert durch Zyklus-Erweiterungsfluidinjektion, und wahlweise verbessert durch zusätzliche Brennstoffinjektion betrieben (Fig. 1A), wobei das Zyklus-Erweiterungsfluid injiziert wird, um die Spitzentemperatur aufrecht zu erhalten oder zu reduzieren, die während des Verbrennungs/Expansions-Zyklus erreicht wird, und trotzdem einen entsprechend hohen Druck in den Zylindern zu erreichen. Die wahlweise zusätzliche Brennstoffinjektion dient zur Erhöhung der Wärmezufuhr und damit des Zylinderdruckes; beide sind durch stöchiometrische Bedingungen begrenzt. In den Diagrammen 2A und 2B gelten die Druck/Volumen-Zyklen und Temperatur/Volumen-Zyklen 4 für einen herkömmlichen fremdgezündeten Kolbenmotor, der unterstöchiometrisch unter geschichteten Ladungsbedingungen betrieben wird. Die Zyklen 2 sind gemäß der Erfindung modifiziert und durch stöchiometrische Bedingungen begrenzt. Dies ergibt einen gleichhohen oder niedrigeren thermodynamischen, jedoch einen besseren mechanischen Wirkungsgrad des Zyklus, was zu einem gleichhohen oder höheren Motorwirkungsgrad, gleichhoher oder höherer Motorleistungsdichte und gleichhoher oder höherer Motorlebensdauer führt. Die Betriebsbedingungen können so gewählt werden, daß entweder kleinere oder leistungsfähigere oder längerlebige Motoren erzielt werden.

### Beispiel 4:

Der Kolbenmotor nach Beispiel 3 wird im (teilweisen) Atkinson-Zyklus (Überexpansion) betrieben, um die Vorteile des nach der Expansion verfügbaren höheren Zylinderdruckes auszunutzen. Den Zyklen 4 nach den Figuren 2A und 2B liegt ein herkömmlicher, fremdgezündeter Kolbenmotor zugrunde, der unterstöchiometrisch unter geschichteten Ladungsbedingungen betrieben wird. Die Zyklen 2 und 3 ergeben sich durch eine Modifikation der Erfindung im Atkinson-Zyklus, wobei der Zyklus durch stöchiometrische Bedingungen begrenzt ist. Dies ergibt einen höheren oder gleichhohen thermodynamischen und einen besseren oder gleichhohen mechanischen Wirkungsgrad des Zyklus, gleichhohen oder höheren Motorwirkungsgrad, gleichhohe oder höhere Motorleistungsdichte und gleichhohe oder höhere Motorlebensdauer. Die Betriebsbedingungen können wiederum so gewählt werden, daß entweder kleinere oder wirksamere oder längerlebige Motoren erzielt werden.

### Beispiel 5:

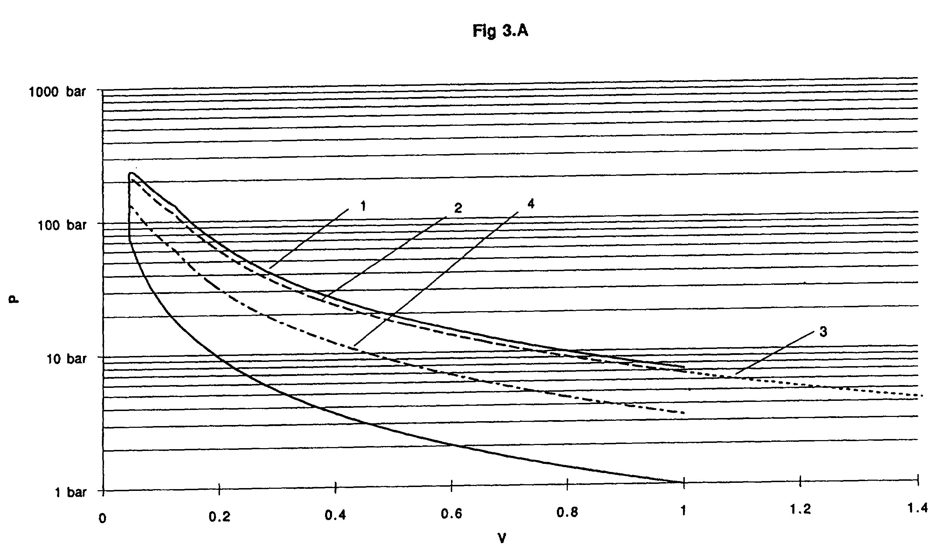

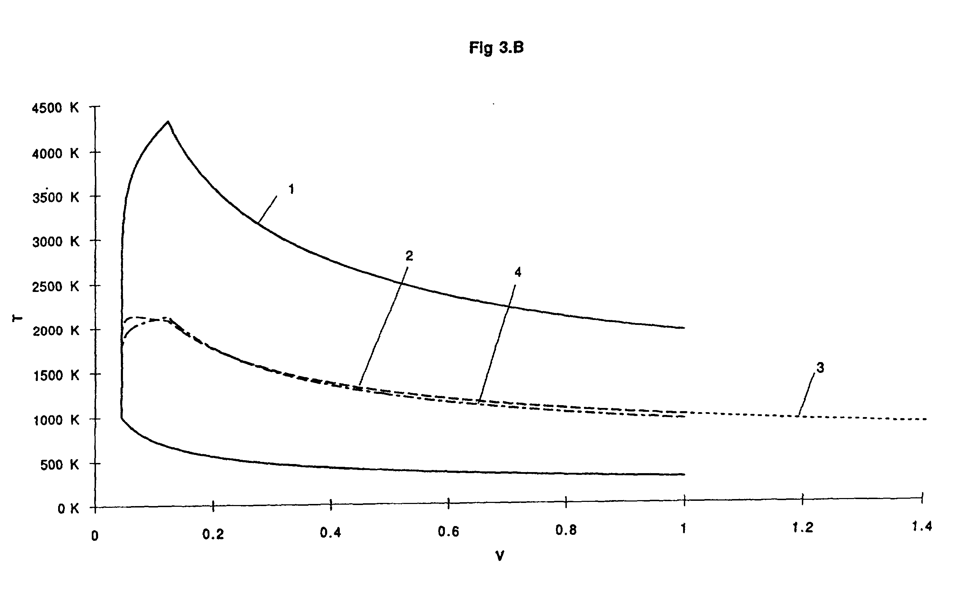

Ein herkömmlicher selbstzündender Kolbenmotor wird unterstöchiometrisch betrieben, durch Zyklus-Erweiterungsfluidinjektion verstärkt und wahlweise mit zusätzlicher Brennstoffinjektion nach Fig. 1B verbessert, wobei Zyklus-Erweiterungsfluid injiziert wird, um die während des Verbrennungs/Expansions-Zyklus auftretende Spitzentemperatur zu reduzieren und trotzdem einen entsprechend hohen Druck in den Zylindern zu erreichen. Wahlweise wird eine zusätzliche Brennstoffinjektion vorgenommen, um die Wärmezufuhr und damit den Zylinderdruck zu erhöhen; die Begrenzung erfolgt durch stöchiometrische Bedingungen. Die Diagramme nach Fig. 3A und 3B zeigen die Druck/Volumen-Zyklen und Temperatur/Volumen-Zyklen 4 eines herkömmlichen selbstzündenden Kolbenmotor, der mit überschüssiger Luft betrieben wird. Die Zyklen 1 in den Figuren 3A und 3B betreffen einen fremdgezündeten Kolbenmotor, der unterstöchiometrisch betrieben wird und bei dem eine zu hohe Betriebstemperatur auftritt. Die Zyklen 2 ergeben sich aufgrund einer Ausführungsform der Erfindung, die durch stöchiometrische Bedingungen begrenzt ist. Dies führt zu einem gleichhohen oder niedrigeren thermodynamischen, jedoch besseren mechanischen Wirkungsgrad des Zyklus, was eine gleichhohe oder höhere Motorleistung, gleichhohe oder höhere Motorleistungsdichte und gleichhohe oder höhere Motorlebensdauer ergibt. Die Betriebsbedingungen können so gewählt werden, daß entweder kleinere oder wirksamere oder längerlebige Motoren erzielt werden.

### Beispiel 6:

Der Kolbenmotor nach Beispiel 5 wird im (teilweisen) Atkinson-Zyklus (Überexpansion) betrieben, um den Vorteil höheren Zylinderdruckes nach einer herkömmlichen Expansion auszunutzen. In den Diagrammen nach Fig. 3A und 3B basieren die Zyklen 4 auf einem herkömmlichen selbstzündenden Kolbenmotor, der unterstöchiometrisch betrieben wird. Die Zyklen 1 beziehen sich auf einen herkömmlichen selbstzündenden Kolbenmotor, der stöchiometrisch betrieben wird und der zu einer zu hohen Betriebstemperatur führt. Die Zyklen 2 und 3 betreffen Kolbenmotoren, die gemäß der Erfindung im Atkinson-Zyklus modifiziert und durch stöchiometrische Bedingungen begrenzt sind. Dies ergibt einen höheren oder gleichhohen thermodynamischen und einen besseren oder gleichhohen mechanischen Wirkungsgrad des Zyklus, was zu einem gleichhohen oder höheren Motorwirkungsgrad, gleichhoher oder höherer Motorleistungsdichte und gleichhoher oder höherer Motorlebensdauer führt. Die Betriebsbedingungen können so gewählt werden, daß entweder kleinere oder effizientere oder längerlebige Motoren erzielt werden.

### Beispiel 7:

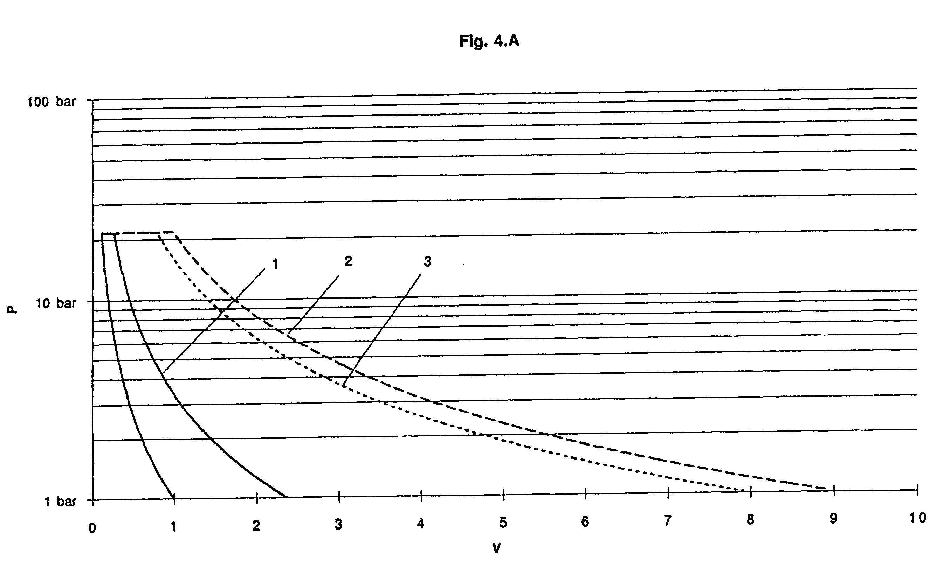

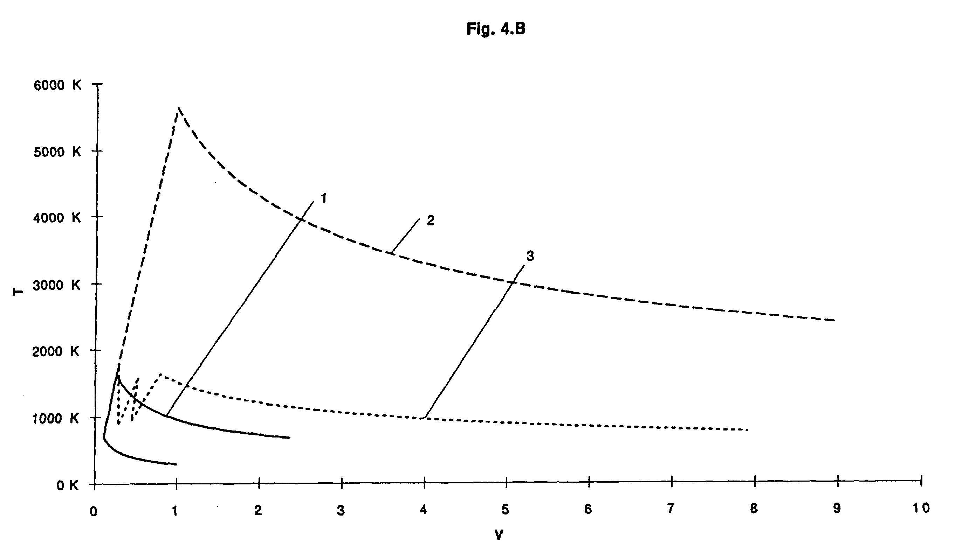

Eine herkömmliche oder durch Dampf verstärkte Gas- oder Brennstoffturbine wird stets unterstöchiometrisch betrieben, durch Injektion mit Zyklus-Erweiterungsfluid verstärkt und mit zusätzlicher Brennstoffinjektion bei hohem Druck unterstützt, wobei das Zyklus-Erweiterungsfluid injiziert wird, um die hinter den Verbrennungskammern erreichte Spitzentemperatur zu reduzieren und das in die nächsten Verbrennungskammern strömende Fluidvolumen zu vergrößern. Dieser Vorgang wird wahlweise wiederholt und ist letztlich durch stöchiometrische Bedingungen begrenzt. Eine derartige Turbine, wie sie in Fig. 1C dargestellt ist, wird so betrieben, daß die an die Expansionsturbine gelangenden Fluidtemperaturen gesenkt werden. In den Figuren 4A und 4E betreffen die Zyklen 1 eine herkömmliche Gas- oder Brennstoffturbine, die unterstöchiometrisch betrieben wird, die Zyklen 2 eine herkömmliche Gas- oder Brennstoffturbine, die stöchiometrisch betrieben wird und zu hohe Betriebstemperaturen ergibt. Die Zyklen 3 betreffen eine Turbine, die gemäß der Erfindung modifiziert und durch stöchiometrische Bedingungen begrenzt ist. Dies führt zu einem gleichhohen oder geringeren thermodynamischen und einem gleichhohen oder besseren mechanischen Wirkungsgrad des Zyklus, zu einem gleichhohen oder höheren Turbinenwirkungsgrad, gleichhoher oder höherer Turbinenleistungsdichte und gleichhoher oder höherer Turbinenlebensdauer. Die Betriebsbedingungen können so gewählt werden, daß entweder kleinere oder wirksamere oder längerlebige Motoren erzielt werden.

### Beispiel 8:

Alle Beispiele 1 - 7 können mit einem mit Sauerstoff angereicherten Arbeitsfluid betrieben werden, damit der stöchiometrische Punkt nach höheren Brennstoffinjektionswerten verschoben wird. Dies wird kombiniert mit erhöhten Zyklus-Erweiterungsfluidinjektionen, um die Verbrennungstemperaturen unter den Grenzwerten zu halten, die für eine hohe Maschinenlebensdauer wichtig sind. Dies ergibt einen ähnlichen thermodynamischen sowie einen besseren oder gleichen mechanischen Wirkungsgrad des Zyklus, einen gleichhohen oder höheren Maschinenwirkunsgrad, gleichhohe oder höhere Maschinenleistungsdichte und gleichhohe oder höhere Maschinenlebensdauer. Die Betriebsbedingungen können so gewählt werden, daß entweder kleinere oder effizientere oder längerlebige Motoren erzielt werden.

### Beispiel 9:

Dieses Beispiel stellt einen Grenzfall des Beispieles 8 nach einem der Beispiele 1 - 7 dar, wobei reiner Sauerstoff als Arbeitsmedium in Verbindung mit wiederholten Brennstoffinjektionen und Zyklus-Erweiterungsfluid-Injektionen (ZEF-Injektionen) angewendet wird, um die Verbrennungstemperaturen unterhalb der Grenzwerte zu halten, die für eine hohe Maschinenlebensdauer entscheidend sind. In den Diagrammen 5A und 5B betreffen die Zyklen 4 einen herkömmlichen fremdgezündeten Kolbenmotor, der unterstöchiometrisch unter geschichteten Ladungsbedingungen betrieben wird. Die Zyklen 1 beziehen sich auf eine herkömmliche fremdgezündete Kolbenmaschine, die stöchiometrisch mit reinem Sauerstoff betrieben wird und die zu hohe Betriebstemperaturen erreicht. Die Zyklen 2 betreffen eine Modifizierung nach der Erfindung, wobei mit reinem Sauerstoff gearbeitet wird und eine Begrenzung durch stöchiometrische Bedingungen gegeben ist. Die Zyklen 2 + 3 stellen einen Betrieb dar, der nach der Erfindung modifiziert ist und der mit reinem Sauerstoff im Atkinson-Zyklus arbeitet, wobei wiederum eine Begrenzung durch stöchiometrische Bedingungen erfolgt.

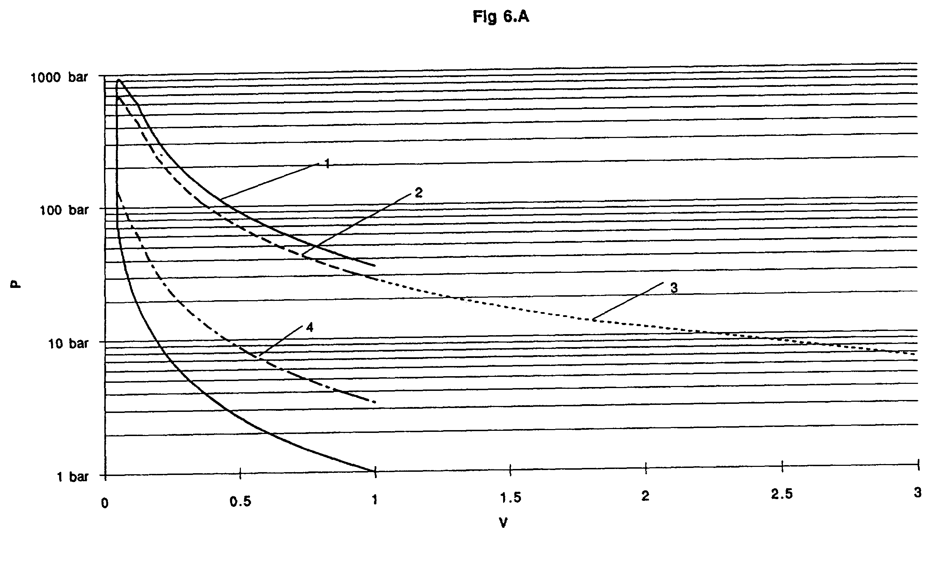

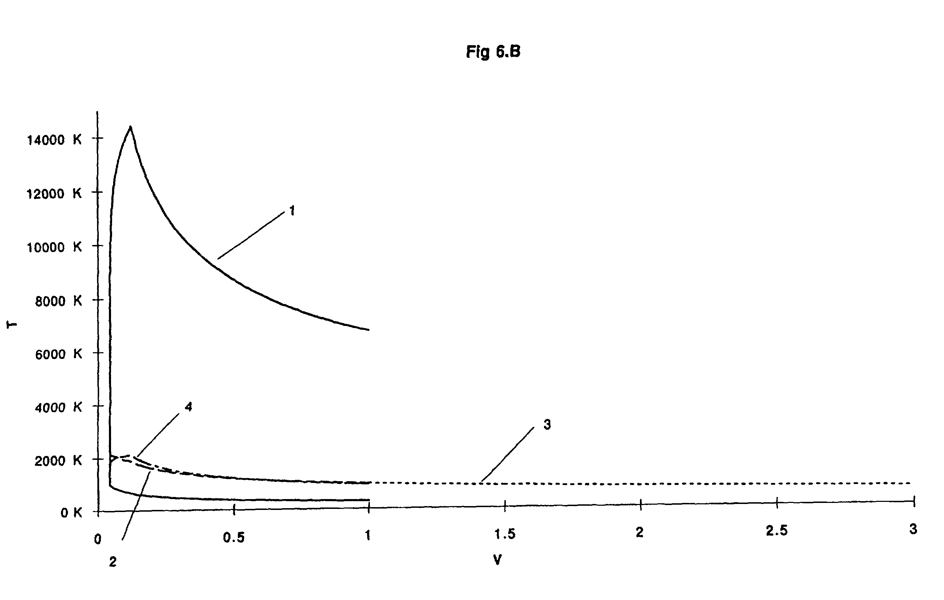

In den Figuren 6A und 6B betreffen die Zyklen (4) einen herkömmlichen eigengezündeten Kolbenmotor, der unterstöchiometrisch betrieben wird. Die Zyklen (1) beziehen sich auf einen konventionellen eigengezündeten Kolbenmotor, der stöchiometrisch mit reinem Sauerstoff betrieben wird, was zu einer zu hohen Betriebstemperatur führt. Die Zyklen (2) betreffen einen Motor, der gemäß der Erfindung modifiziert ist und der mit reinem Sauerstoff, begrenzt durch stöchiometrische Bedingungen, betrieben wird. Die Zyklen (2) + (3) betreffen einen gemäß der Erfindung modifizierten Motor, der mit reinem Sauerstoff im Atkinson-Zyklus, begrenzt durch stöchiometrische Bedingen, betrieben wird.

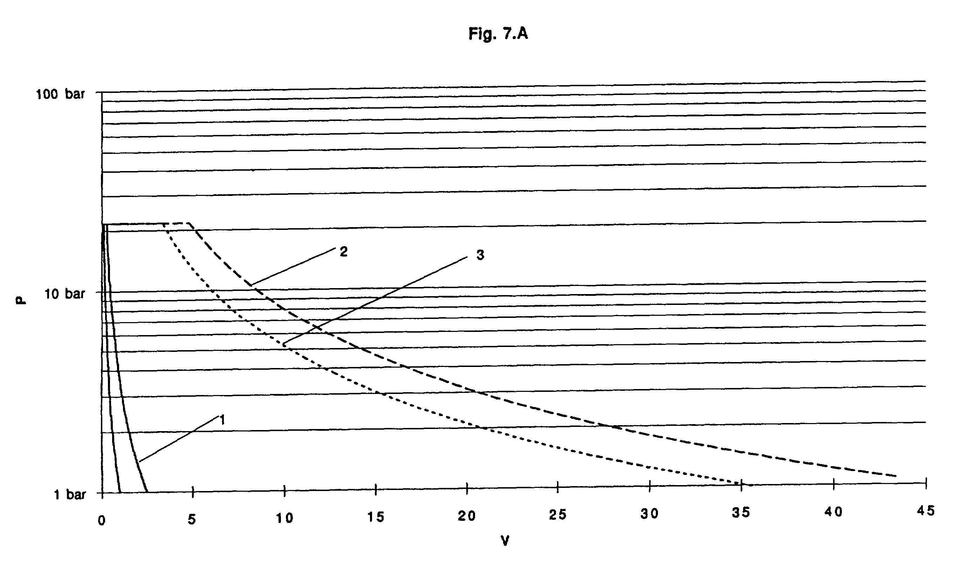

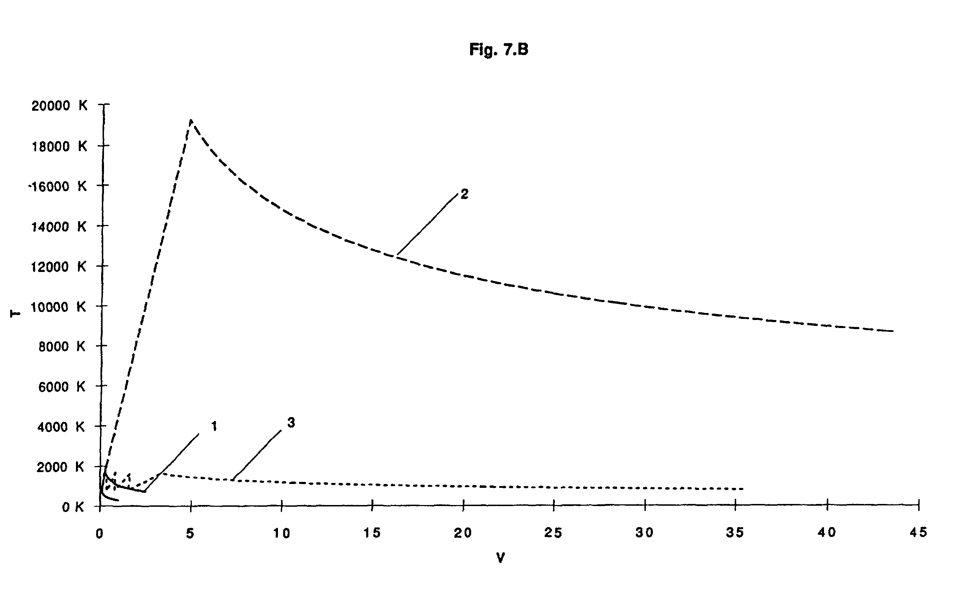

Die Diagramme nach den Figuren 7A und 7B zeigen die Zyklen (1), die auf einer herkömmlichen Gas- oder Brennstoffturbine basieren, die unterstöchiometrisch betrieben wird. Die Zyklen (2) betreffen eine herkömmliche Gas- oder Brennstoffturbine, die stöchiometrisch mit reinem Sauerstoff betrieben wird, wobei zu hohe Arbeits- temperaturen entstehen. Die Zyklen (3) basieren auf Gas- oder Brennstoffturbinen, die gemäß der Erfindung modifiziert sind und die mit reinem Sauerstoff, begrenzt durch stöchiometrische Bedingungen betrieben werden.

Dies führt zu einem ähnlichen thermodynamischen Wirkungsgrad und einem höheren oder gleichhohen mechanischen Wirkungsgrad des Zyklus, was zu einem gleichhohen oder höheren Maschinenwirkungsgrad, gleichhoher oder höherer Maschinenleistungsdichte und gleichhoher oder höherer Maschinenlebensdauer führt. Die Betriebsbedingungen können so gewählt werden, daß entweder kleinere oder wirksamere oder längerlebige Motoren erzielt werden.

### Beispiel 10:

Alle Beispiele 1 - 9 werden mit einer geringen Zugabe von z.B. 0,01 % H₂O₂, O₃, organischen Peroxiden oder anderen oxidierenden Substanzen in das Zyklus-Erweiterungsfluid betrieben, um eine Reinigung von Abgasen zu erzielen. Wenn Wasser als Zyklus-Erweiterungsfluid zugesetzt wird, können niedrige H₂O₂- oder O₃-Angaben durch einfache On-line (Durchfluß-) Elektrolyse des Wassers erreicht werden.

### Beispiel 11:

Alle vorgenannten Beispiele 1 - 10 werden mit einem hohen Zusatz von H₂O₂, O₃, organischen Peroxiden oder anderen oxidierenden Substanzen zum Zyklus-Erweiterungsfluid betrieben, um die Leistungsdichte weiter zu erhöhen, indem ein Teil der oxidierenden Substanz dem Zyklus beigegeben wird.

### Beispiel 12:

Alle vorbeschriebenen Beispiele 1 - 11 werden so betrieben, daß das Zyklus-Erweiterungsfluid auch mit löslichen oder dispergierbaren Brennstoffen versetzt werden kann. Eine Zündung wird durch eine konzentrierte Brennstoffcharge vorgenommen und der verdünnte Brennstoff brennt dann in einer Umgebung von Zyklus-Erweiterungsfluid. Der Grenzfall für diese Anwendung ist dadurch gegeben, daß der gesamte Brennstoff in einer Zyklus-Erweiterungsfluidbasis zugeführt wird.

### Beispiel 13:

Alle Beispiele 1 - 12 werden mit einem Rückgewinnungssystem von Zyklus-Erweiterungsfluid in der Abgasleitung versehen. Der Grund für eine solche Rückgewinnung ist dreifacher Art. Durch Konzentrieren des Zyklus-Erweiterungsfluids wird ein entscheidender Anteil an partikelförmigen Stoffen und wasserlöslichen Verunreinigungen gebunden. Durch Rückführen in den Zyklus wird ein wesentlicher Teil davon in dem Verbrennungsvorgang zerstört, wodurch zusätzliche Wärme gewonnen wird und die Abgase gereinigt werden. Ein zweiter Grund besteht darin, daß der Strom des Zyklus-Erweiterungsfluids bis zu 20 x höher sein kann als der Brennstoffstrom. Betrachtet man die Anwendung auf ein Auto, das einen Verbrauch von 3 I/100 km Dieselöl hat, würde der Motor bis zu 60 I/100 km an Zyklus-Erweiterungsfluid verbrauchen. Selbst im Falle von jederzeit verfügbarem und billigem Wasser könnte das Wasserreservoir durch eine herkömmliche Wasserrückgewinnungseinheit alleine schon aus Volumen- und Gewichtsgründen ersetzt werden. Ein dritter Grund sind die Kosten, wenn teuere Zyklus-Erweiterungsfluide verwendet werden.

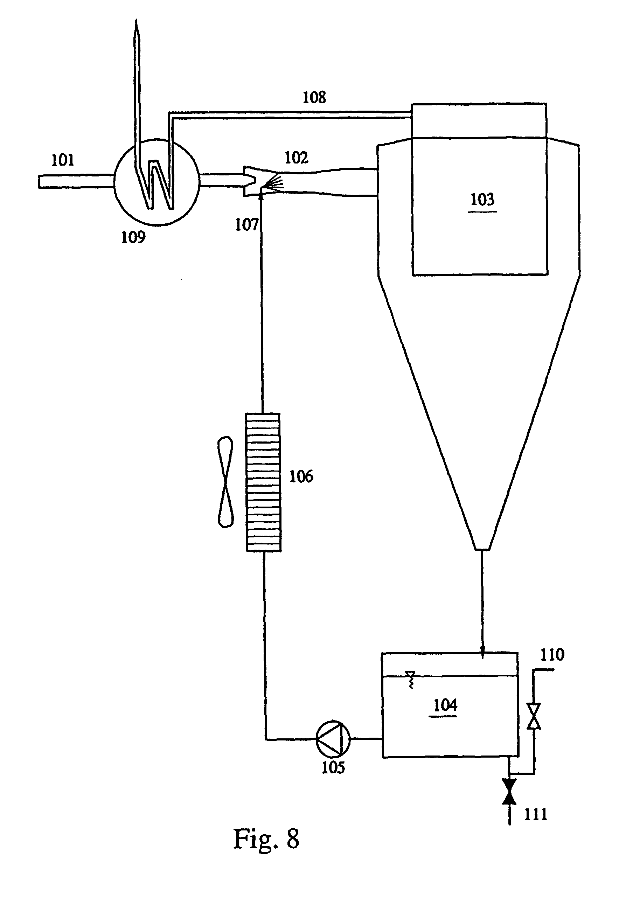

Ein typisches Ausführungsbeispiel für die Rückgewinnung des ZEF ist in Fig. 8 angegeben. Es besteht aus einer Zirkulationspumpe 105, die das Zyklus-Erweiterungsfluid durch einen Luftkühler 106 in Umlauf setzt, an den sich ein direktes Einsprühen des Zyklus-Erweiterungsfluids 107 in die Auspuffgase 101 in einem Gaswäscher 102 anschließt, wobei eine Direkt-Kontaktkondensation erreicht wird. Das kondensierte Zyklus-Erweiterungsfluid wird dann in einem Setzbehälter und/oder einem Zyklon 103 getrennt. Das Zyklus-Erweiterungsfluid wird in den Speichertank 104 zurückgeführt, der mit Überlauf 110 und Abfluß 111 versehen ist. Auspuffgase 101 können wahlweise in einem Wärmetauscher 109 vorgekühlt werden, der die von dem Zyklus-Erweiterungsfluid abgegebenen Auspuffgase 108 erneut erhitzt.

## Patentansprüche

1. Verfahren zum Betreiben von Kolben-Brennkraftmaschinen nach Art eines Dieselmotors oder Otto-Motors, oder eines Turbinenmotors oder Kombinationen hiervon, mit einer Verbrennung des Brennstoffes in einer Verbrennungskammer, der der Brennstoff über einen Speisegaseinlaß mit Einlaßventil(en) zugeführt und aus der die Verbrennungsgase über einen Gasauslaß mit Auslaßventil(en) abgeführt wird, **dadurch gekennzeichnet,** daß zusätzlich zu herkömmlich verwendetem Brennstoff ein Zyklus-Erweiterungsfluid (ZEF) in Form von Wasser oder einem anderen, chemisch inerten oder endothermisch zerlegbaren Fluid in die Brennkammer eingespritzt wird, um eine größere Menge an Brennstoff pro Zyklus verwenden zu können, wobei gleichzeitig Temperatur und Druck mit hoher Maschinenlebensdauer vereinbar bleiben, daß hohe Temperatur gegen hohen Druck und/oder hohes Volumen vertauscht wird, indem das Zyklus-Erweiterungsfluid verdampft oder chemisch zerlegt wird, und daß im Falle der Verwendung von Wasser als ZEF die Wasserinjektionswerte zwischen der 1,5-fachen und der 20-fachen Menge an total verwendetem Brennstoff betragen.

2. Verfahren nach Anspruch 1, dadurch gekennzeichnet, daß die Brennkraftmaschine fremdgezündet und mit konventionellen stöchiometrischen Bedingungen, verbunden mit Injektionen des Zyklus-Erweiterungsfluids, betrieben wird, und daß durch Injizieren des Zyklus-Erweiterungsfluids die Spitzentemperatur, die beim Verbrennungs-Expansionszyklus erreicht wird, reduziert wird, und trotzdem ein entsprechend hoher Druck in den Zylindern erreicht wird.

3. Verfahren nach einem der Ansprüche 1 oder 2, dadurch gekennzeichnet, daß die Brennkraftmaschine nach unterstöchiometrischen, geschichteten Ladungsbedingungen, verstärkt durch das Zyklus-Erweiterungsfluid, und wahlweise mit zusätzlicher Brennstoffeinspritzung betrieben wird, wobei das Zyklus-Erweiterungsfluid eingespritzt wird, um die beim Verbrennungs-Expansionszyklus erreichte Spitzentemperatur aufrecht zu erhalten oder zu reduzieren und trotzdem einen entsprechenden Druck in den Zylindern zu erreichen.

4. Verfahren nach einem der Ansprüche 1 - 3, dadurch gekennzeichnet, daß bei einer herkömmlichen, selbstzündenden Kolbenmaschine, die unterstöchio-metrisch betrieben wird, Zyklus-Erweiterungsfluid injiziert wird, und daß wahlweise eine zusätzliche Brennstoffinjektion vorgenommen wird, wobei das Zyklus-Erweiterungsfluid injiziert wird, um die während des Verbrennungs-Expansionszyklus erreichte Spitzentemperatur zu reduzieren und trotzdem einen entsprechend hohen Druck in den Zylindern zu erreichen.

5. Verfahren nach Anspruch 2, 3 oder 4, dadurch gekennzeichnet, daß eine wahlweise zusätzliche Brennstoffinjektion vorgenommen wird, um die Energie-zufuhr und damit den Zylinderdruck weiter zu erhöhen, begrenzt durch die stöchiometrischen Bedingungen.

6. Verfahren nach Anspruch 2, 3, 4 oder 5, dadurch gekennzeichnet, daß im Atkinson-Zyklus (Überexpansion) gearbeitet wird und daß der nach der herkömm-lichen Expansion verfügbare höhere Zylinderdruck ausgenutzt wird.

7. Verfahren nach Anspruch 1 in Verbindung mit herkömmlichen oder durch Dampf verstärkten Gas- oder Brennstoffturbinen, die stets unterstöchiometrisch betrieben werden, dadurch gekennzeichnet, daß Zyklus-Erweiterungsfluid injiziert wird, und daß bei hohem Druck zusätzlicher Brennstoff injiziert wird, wobei das Zyklus-Erweiterungsfluid injiziert wird, um die hinter den Verbrennungskammern erreichte Spitzentemperatur zu reduzieren und das in die nächsten Verbrennungskammern strömende Fluidvolumen zu erhöhen, dieser Vorgang wahlweise wiederholt wird und letztlich nur eine Begrenzung durch die stöchiometrischen Bedingungen erfolgt.

8. Verfahren nach einem der Ansprüche 1 - 7, dadurch gekennzeichnet, daß der Betrieb mit mit Sauerstoff angereichertem Arbeitsfluid durchgeführt wird, so daß der stöchiometrische Punkt nach höheren Brennstoff-Injektionswerten verschoben wird, wobei wahlweise erhöhte Zyklus-Erweiterungsfluid-Injektionen vorgenommen werden, um Verbrennungstemperaturen unterhalb der für die hohe Motorlebensdauer maßgeblichen Grenzen gehalten werden.

9. Verfahren nach Anspruch 8, dadurch gekennzeichnet, daß als Arbeitsfluid reiner Sauerstoff in Verbindung mit wiederholten Brennstoffinjektionen dient und Zyklus-Erweiterungsfluid-Injektionen durchgeführt werden, um die Verbrennungstemperaturen unterhalb den für hohe Motorlebensdauer maßgeblichen Grenzen zu halten.

10. Verfahren nach einem der Ansprüche 1 - 9, dadurch gekennzeichnet, daß eine weiche Additive mit z.B. 0,01 % H₂O₂ , O₃ organischen Peroxiden oder anderen oxidierenden Substanzen dem Zyklus-Erweiterungsfluid beigegeben wird, um eine Reinigung der Auspuffgase zu erreichen.

11. Verfahren nach einem der Ansprüche 1 - 10, dadurch gekennzeichnet, daß eine starke Additive von H₂O₂, O₃, organischen Peroxiden oder anderen oxidierenden Substanzen dem Zyklus-Erweiterungsfluid beigegeben wird, um die Erhöhung der Leistungsdichte zu verbessern, wobei ein Teil der oxidierenden Substanz über das ZEF als Träger in den Zyklus eingeführt wird.

12. Verfahren nach einen der Ansprüche 1 - 11, dadurch gekennzeichnet, daß das Zyklus-Erweiterungsfluid mit löslichen oder dispergierenden Brennstoffen versetzt wird, daß eine Zündung durch eine konzentrierte Brennstoffcharge vorgenommen wird, und daß der verdünnte Brennstoff dann in einer Umgebung von Zyklus-Erweiterungsfluid verbrannt wird.

13. Verfahren nach einem der Ansprüche 1 - 12, dadurch gekennzeichnet, daß in der Auspuffgasleitung ein Zyklus-Erweiterungsfluid-Rückgewinnungssystem verwendet wird, bei dem das Zyklus-Erweiterungsfluid kondensiert wird, ein wesentlicher Teil der partikelförmigen und fluidlöslichen Verunreinigungen unschädlich gemacht wird und durch Rückführung derselben in den Zyklus ein entscheidender Teil von ihnen im Verbrennungsvorgang zerstört wird.

14. Brennkraftmaschine mit Fremdzündung, zur Durchführung des Verfahrens nach einem der Ansprüche 1 - 13 mit
a) mindestens einer Brennkammer (1) mit hin- und hergehend oder rotierend angetriebener Kolben-Zylinder-Anordnung (2, 3),
b) einer Zuführvorrichtung (4, 8) zum Einspeisen von primärem Kraftstoff in Form von Benzin, Diesel, Kraftstoffgas oder äquivalentem Kraftstoff mit Hilfe einer Vergaservorrichtung (8),
c) einer Zuführvorrichtung (4) zum Einspeisen von Speisegas in Form von Luft und/oder einem entsprechenden, den Verbrennungsvorgang unterstützenden Gas, mit Einlaßvorrichtung (5) in die Brennkammer (1),
d) einer Zündvorrichtung (9) zum zeitgesteuerten Zünden des komprimierten Brennstoff-Gas-Gemisches in der Brennkammer (1),
e) einer Abgasvorrichtung (6, 7) mit Auslaßvorrichtung (6) und Abgasleitung (7),
**gekennzeichnet durch**
f) eine Zuführvorrichtung (12, 13, 16, 17, 10) zum Einspeisen eines Zyklus-Erweiterungsfluids (ZEF) in flüssiger, gasförmiger oder gemischter Form in die Brennkammer (1) über einen Injektor (10), der so ausgebildet ist, daß im Falle der Verwendung von Wasser als ZEF die Wasserinjektionswerte zwischen der 1,5-fachen und der 20-fachen Menge an total verwendetem Brennstoff betra gen,
g) eine weitere Zuführvorrichtung (11) zum Einspeisen von zusätzlichen Mengen von sekundärem Kraftstoff in die Brennkammer (1) über sekundäre Injektoren (11), und
h) ein Motor-Management-System zur Zeitsteuerung der Zünd- und Einspritzzeiten sowie Einspritzmengen entsprechend den jeweiligen Lastbedingungen.

15. Brennkraftmaschine mit Selbstzündung zur Durchführung eines Verfahrens nach einem der Ansprüche 1 - 13, mit
a) mindestens einer Brennkammer (1) mit hin- und hergehend oder rotierend angetriebener Kolben-Zylinder-Anordnung (2, 3),
b) einer Zuführvorrichtung (20) zum Einspeisen von primärem Kraftstoff in Form von Dieselkraftstoff oder äquivalentem Kraftstoff,
c) einer Zuführvorrichtung (4) zum Einspeisen von Speisegas in Form von Luft und/oder einem entsprechenden, den Verbrennungsvorgang unterstützenden Gas, mit Einlaßvorrichtung (5) in die Brennkammer (1),
d) einer Abgasvorrichtung (6, 7) mit Auslaßvorrichtung (6) und Abgasleitung (7),
**gekennzeichnet durch**
e) eine Zuführvorrichtung (12, 13, 16, 17, 10) zum Einspeisen eines Zyklus-Erweiterungsfluids (ZEF) in flüssiger, gasförmige oder gemischter Form in die Brennkammer (1) über einen Injektor (10), der so ausgebildet ist, daß im Falle der Verwendung von Wasser als ZEF die Wasserinjektionswerte zwischen der 1,5-fachen und der 20-fachen Menge an total verwendetem Brennstoff betragen,
f) eine weitere Zuführvorrichtung (11) zum Einspeisen von zusätzlichen Mengen von sekundärem Brennstoff in die Brennkammer (1) über sekundäre Injektoren (11), und
g) ein Motor-Management-System zur Zeitsteuerung der Zünd- und Einspritzzeiten sowie Einspritzmengen entsprechend den jeweiligen Lastbedingungen.

16. Turbinen-Brennkraftmaschine, zur Durchführung eines Verfahrens nach einem der Ansprüche 1 - 13, mit
a) mindestens einer Brennkammer (24), wobei die Kompression durch ein- oder mehrstufige rotierende Turbinen (21, 22) und die Expansion (Energierückgewinnung) durch ein- oder mehrstufige rotierende Turbinen (27, 28) erzeugt wird,
b) einer ersten Zuführvorrichtung (26) zum Einspeisen von primärem Brennstoff in Form von Benzin, Öl, Gas oder dergl., mit einer Mischvorrichtung,
c) einer Zuführvorrichtung (4) zum Einspeisen von Speisegas in Form von Luft und/oder einem entsprechenden, den Verbrennungsvorgang unterstützen den Gas mittels verstellbarer Einlaß-Leitschaufeln in die erste Stufe, von der Brennkammer getrennt durch die Kompressionsturbine (21, 22),
d) einer ersten Zündvorrichtung (9) zum Zünden des komprimierten Kraftstoff-Gas-Gemisches in der Brennkammer,
e) einer Abgasvorrichtung (29), von der Brennkammer getrennt durch die Expansionsturbinen (27, 28),
gekennzeichnet durch
f) eine Zuführvorrichtung (37, 33, 34, 23, 30, 31) zum Einspeisen eines Zyklus-Erweiterungs-Fluids (ZEF) in flüssiger, gasförmiger oder gemischer Form in die Brennkammern (24) innerhalb oder außerhalb der Verbrennungszone über mindestens einen Injektor (31), der so ausgebildet ist, daß die gesam ten Wasserinjektionswerte zwischen der 1,5-fachen und der 20-fachen Menge an total verwendetem Brennstoff betragen,
g) mindestens eine zusätzliche Brennkammer (24) mit Zuführvorrichtung zum Einspeisen von zusätzlichen Mengen an sekundärem Brennstoff in die Brennkammer (26) über sekundäre Injektoren, mit einer Zündvorrichtung (9).

17. Brennkraftmaschine nach einem der Ansprüche 14, 15 oder 16, dadurch gekennzeichnet, daß die Einspeisevorrichtung (10, 31) für ZEF über eine Injektionspumpe (16, 34) aus einer ZEF-Mischkammer (13, 33) gespeist ist.

18. Brennkraftmaschine nach einem der Ansprüche 14 - 17, dadurch gekennzeichnet, daß das ZEF aus dem ZEF-Speicher (12, 37) über eine Mischkammer (13, 33), der Peroxyd (15, 36) und Brennstoff (14, 35) zugeführt wird, und ggf. über einen Wärmetauscher (17, 30) gespeist wird.

19. Brennkraftmaschine nach einem der Ansprüche 14 - 18, dadurch gekennzeichnet, daß der Einlaß (5) mindestens eine Kompressorturbine (21, 22) und der Auslaß (6) mindestens eine Expansionsturbine (27, 28) aufweist.

20. Brennkraftmaschine nach einem der Ansprüche 14 - 19, dadurch gekennzeichnet, daß zum Vorheizen des Zyklus-Erweiterungsfluids (ZEF) ein Zuführgas-Zwischenkühler (23) und/oder ein Wärmetauscher (17, 30) vorgesehen ist.

21. Brennkraftmaschine nach einem der Ansprüche 14 - 20, dadurch gekennzeichnet, daß zusätzliche Brennstoffinjektoren (11) in der Verbrennungskammer (1) vorgesehen sind, um zusätzliche Energie in den Zyklus einzuführen.

22. Brennkraftmaschine nach einem der Ansprüche 14 - 21, dadurch gekennzeichnet, daß der im Gaseinlaß (4) angesaugten Luft mit Sauerstoff angereicherte Verbrennungsluft oder reiner Sauerstoff zugesetzt wird.

## Claims

1. Method for operating piston internal combustion engines in the form of a diesel or petrol engine, or a turbine engine or combinations thereof, with the combustion of the fuel in a combustion chamber, to which the fuel is supplied by means of a feed gas inlet with an inlet valve or valves and from which the combustion gases are removed by means of a gas outlet with an outlet valve or valves, characterized in that in addition to the conventionally used fuel, into the combustion chamber is injected a cycle extension fluid (CEF) in the form of water or some other chemically inert or endo-thermically deposable fluid, in order to be able to use a larger fuel quantity per cycle and at the same time the temperature and pressure remain compatible with a long engine life, that high temperature is exchanged for high pressure and/or high volume, in that the cycle extension fluid is evaporated or chemically decomposed, and that in the case where water is used as the CEF the water injection values are between 1.5 and 20 times the quantity of the total fuel used.

2. Method according to claim 1, characterized in that the internal combustion engine is externally auto-ignited and operated with conventional stoichiometric conditions, linked with injections of the cycle extension fluid, and that by injecting the cycle extension fluid the peak temperature reached during the combustion-expansion cycle is reduced and despite this a correspondingly high pressure is attained in the cylinders.

3. Method according to one of the claims 1 or 2, characterized in that the internal combustion engine is operated under substoichiometric, laminar load conditions, boosted by the cycle extension fluid and, as desired, with additional fuel injection, the cycle extension fluid is injected, in order to maintain or reduce the peak temperature reached during the combustion-expansion cycle and in spite of this attain a corresponding pressure in the cylinders.

4. Method according to one of the claims 1 to 3, characterized in that in a conventional, self-igniting piston engine which is operated substoichiometrically, cycle extension fluid is injected and that, as desired, an additional fuel injection takes place, the cycle extension fluid being injected in order to reduce the peak temperature reached during the combustion-expansion cycle and in spite of this attain a correspondingly high pressure in the cylinders.

5. Method according to claim 2, 3 or 4, characterized in that, as desired, an additional fuel injection takes place in order to further increase the energy supply and therefore the cylinder pressure, limited by the stoichiometric conditions.

6. Method according to claim 2, 3, 4 or 5, characterized in that working takes place in the Atkinson cycle (overexpansion) and that the higher cylinder pressure available after conventional expansion is utilized.

7. Method according to claim 1 in conjunction with conventional or steam-boosted gas or fuel turbines always operated substoichiometrically, characterized in that the cycle extension fluid is injected and that at high pressure additional fuel is injected, the cycle extension fluid being injected in order to reduce the peak temperature reached behind the combustion chambers and to increase the fluid volume flowing into the next combustion chambers, said process being repeated as desired and ultimately there is only a limitation by the stoichiometric conditions.

8. Method according to one of the claims 1 to 7, characterized in that operation takes place with oxygen-enriched working fluid, so that the stoichiometric point is displaced towards higher fuel injection values and where, as desired, increase cycle extension fluid injections take place in order to maintain the combustion temperatures below the limits decisive for long engine life.

9. Method according to claim 8, characterized in that the working fluid is constituted by pure oxygen in conjunction with repeated fuel injections and cycle extension fluid injections take place in order to keep the combustion temperatures below the limits decisive for long engine life.

10. Method according to one of the claims 1 to 9, characterized in that to the cycle extension fluid is added a weak additive with e.g. 0.01% H₂O₂, O₃, organic peroxides or other oxidizing substances in order to purify the exhaust gases.

11. Method according to one of the claims 1 to 10, characterized in that a strong additive of H₂O₂, O₃, organic peroxides or other oxidizing substances is added to the cycle extension fluid in order to improve the increase in the power density, part of the oxidizing substance being introduced via the CEF as the carrier into the cycle.

12. Method according to one of the claims 1 to 11, characterized in that the cycle extension fluid is mixed with soluble or dispersing fuels, that an ignition takes place through a concentrated fuel charge and that the diluted fuel is then burnt in a cycle extension fluid environment.

13. Method according to one of the claims 1 to 12, characterized in that in the exhaust pipe use is made of a cycle extension fluid recovery system, in which the cycle extension fluid is condensed, a significant part of the particulate and fluid-soluble impurities are rendered harmless and by the return thereof into the cycle a large part thereof is destroyed in the combustion process.

14. External combustion engine with auto-ignition for performing the method according to one of the claims 1 to 13 with
a) at least one combustion chamber (1) with reciprocating or rotary driven piston-cylinder arrangement (2, 3),
b) a supply device (4, 8) for feeding primary fuel in the form of petrol diesel, fuel gas or equivalent fuel with the aid of a carburettor device (8),
c) a supply device (4) for feeding feed gas in the form of air and/or a corresponding gas assisting the combustion process with the inlet device (5) into the combustion chamber (1),
d) an igniting device (9) for the timed ignition of the compressed fuel-gas mixture in the combustion chamber (1),
e) an exhaust device (6, 7) with an outlet device (6) and exhaust pipe (7),
characterized by
f) a supply device (12, 13, 16, 17, 10) for feeding a cycle extension fluid (CEF) in liquid, gaseous or mixed form into the combustion chamber (1) by means of an injector (10), which is constructed in such a way that when water is used as the CEF the water injection values are between 1.5 and 20 times the total fuel used,
g) a further supply device (11) for feeding additional secondary fuel quantities into the combustion chamber (1) via secondary injectors (11) and
h) an engine management system for timing the ignition and injection times and injection quantities in accordance with the prevailing load conditions.

15. Internal combustion engine with self-ignition for performing the method according to one of the claims 1 to 13, with
a) at least one combustion chamber (1) with reciprocating or rotary driven piston-cylinder arrangement (2, 3),
b) a supply device (20) for feeding primary fuel in the form of diesel fuel or equivalent fuel,
c) a supply device (4) for feeding feed gas in the form of air and/or a corresponding gas assisting the combustion process with an inlet device (5) into the combustion chamber (1),
d) an exhaust device (6, 7) with outlet device (6) and exhaust pipe (7),
characterized by
e) a supply device (12, 13, 16, 17, 10) for feeding a cycle extension fluid (CEF) in liquid, gaseous or mixed form into the combustion chamber (1) by means of an injector (10), which is constructed in such a way that when water is used as the CEF the water injection values are between 1.5 and 20 times the total fuel quantity used,
f) a further supply device (11) for feeding additional secondary fuel quantities into the combustion chamber (1) via secondary injectors (11) and
g) an engine management system for the timing of the ignition and injection times and the injection quantities in accordance with the prevailing load conditions.

16. Turbine internal combustion engine for performing a method according to one of the claims 1 to 13, with
a) at least one combustion chamber (24), in which the compression is produced single-stage or multistage rotating turbines (21, 22) and the expansion (energy recover) by single-stage or multistage rotating turbines (27, 28),
b) a first supply device (26) for feeding primary fuel in the form of petrol, oil, gas, etc. with a mixing device,
c) a supply device (4) for feeding feed gas in the form of air and/or a corresponding gas assisting the combustion process by means of adjustable inlet guide blades into the first stage separated from the combustion chamber by the compression turbine (21, 22),
d) a first igniting device (9) for igniting the compressed fuel-gas mixture in the combustion chamber,
e) an exhaust device (29) separated from the combustion chamber by the expansion turbines (27, 28),
characterized by
f) a supply device (37, 33, 34, 23, 30, 31) for feeding a cycle extension fluid (CEF) in liquid, gaseous or mixed form into the combustion chambers (24) inside or outside the combustion zone by means of at least one injector (31), which is constructed in such a way that the total water injection values are between 1.5 and 20 times the total fuel quantity used,
g) at least one additional combustion chamber (24) with supply device for feeding additional secondary fuel quantities into the combustion chamber (26) by means of secondary injectors and with an igniting device (9).

17. Internal combustion engine according to one of the claims 14, 15 or 16, characterized in that the CEF feed device (10, 31) is supplied from a CEF mixing chamber (13, 33) by means of an injection pump (16, 34).

18. Internal combustion engine according to one of the claims 14 to 17, characterized in that the CEF from the CEF storage tank (12, 37) is fed via a mixing chamber (13, 33), to which peroxide (15, 36) and fuel (14, 35) is supplied, and optionally via a heat exchanger (17, 30).

19. Internal combustion engine according to one of the claims 14 to 18, characterized in that the inlet (5) has at least one compression turbine (21, 22) and the outlet (6) at least one expansion turbine (27, 28).

20. Internal combustion engine according to one of the claims 14 to 19, characterized in that for preheating the cycle extension fluid (CEF) there is a supply gas intermediate cooler (23) and/or a heat exchanger (17, 30).

21. Internal combustion engine according to one of the claims 14 to 20, characterized in that there are additional fuel injectors (11) in the combustion chamber (1) in order to introduce additional energy into the cycle.

22. Internal combustion engine according to one of the claims 14 to 21, characterized in that oxygen-enriched combustion air or pure oxygen is added to the air sucked into the gas inlet (4).

## Revendications

1. Procédé d'actionnement de moteurs à combustion interne avec pistons, qu'il s'agisse d'un moteur diesel, d'un moteur à carburateur, d'une turbine ou d'une combinaison de ces moteurs, avec combustion du carburant dans une chambre de combustion, le carburant étant ammené vers cette chambre via un orifice d'admission du gaz d'alimentation avec soupape(s) et éconduit via un orifice d'évacuation du gaz avec soupape(s) d'échappement, et **caractérisé en ce que,** en plus du carburant d'origine, un fluide d'extension de cycle (FEC) est injecté dans la chambre de combustion, sous la forme d'eau ou d'un autre fluide chimiquement inerte ou décomposable endothermiquement. Cette injection supplémentaire permet l'utilisation d'une plus grande quantité de carburant par cycle, la température et la pression restant compatibles avec la durée de vie élevée du moteur. Le procédé est également caractérisé en ce que la température élevée est remplacée par une forte pression et / ou un volume important, du fait de l'évaporation ou de la décomposition chimique du fluide d'extension de cycle, et en ce que, lorsque le fluide d'extension du cycle est de l'eau, les valeurs d'injection d'eau sont 1,5 à 20 fois supérieures à la quantité totale de carburant utilisée.

2. Procédé selon la revendication 1 ou 2, caractérisé en ce que le moteur à combustion interne est actionné par allumage commandé et dans des conditions stoechiométriques conventionnelles liées aux injections du fluide d'extension de cycle, et en ce que la température maximale lors du cycle de combustion - expansion est limitée par l'injection du fluide d'extension du cycle, la pression dégagée dans les cylindres étant néanmoins assez importante.

3. Procédé selon la revendication 1 ou 1, caractérisé en ce que l'activation du moteur à combustion interne est favorisée, dans des conditions de charge stratifiées et sous-stoechiométriques, par le fluide d'extension du cycle et en ce que le moteur à combustion interne est activé par injection de carburant supplémentaire, le fluide d'extension de cycle servant pour sa part à maintenir ou à réduire les températures maximales atteintes lors du cycle de combustion - expansion, tout en produisant une pression assez forte dans les cylindres.

4. Procédé selon l'une ou l'autre des revendications 1 à 3, caractérisé par l'injection d'un fluide d'extension de cycle dans le cas de moteurs à combustion interne et à auto-allumage activés dans des conditions sous-stoechiométriques, ainsi que par une éventuelle injection de carburant supplémentaire destinée à réduire la température maximale atteinte au cours du cycle de combustion - expansion, tout en obtenant une pression élevée dans les cylindres.

5. Procédé selon l'une ou l'autre des revendications 2, 3 ou 4, caractérisé par une éventuelle injection de carburant supplémentaire destinée à augmenter l'apport d'énergie et à augmenter la pression dans les cylindres, limitée par les conditions stoechiométriques.

6. Procédé selon l'une ou l'autre des revendications 2, 3, 4 ou 5, caractérisé par le travail en cycle d'Atkinson (surexpansion) et par l'utilisation d'une pression de cylindre plus élevée disponible selon l'expansion traditionnelle.

7. Procédé selon la revendication 1 combiné avec des turbines à gaz ou à carburant traditionnelles ou renforcées par la vapeur, turbines activées de bout en bout dans des conditions sous-stoechiométriques, et caractérisé par l'injection d'un fluide d'extension de cycle et d'un carburant supplémentaire à pression élevée, le fluide d'extension de cycle étant destiné à réduire la température maximale obtenue après les chambres de combustion et à augmenter le volume de fluide s'écoulant dans les chambres de combustion suivantes. Ce procédé peut être répété autant de fois qu'on le souhaite et n'est finalement limité que par les conditions stoechiométriques.

8. Procédé selon l'une ou l'autre des revendications 1 à 7, caractérisé en ce que le moteur est activé grâce à un fluide de travail enrichi à l'oxygène, de telle sorte que le point stoechiométrique soit décalé vers des valeurs d'injection de carburant supérieures, et caractérisé par d'éventuelles injections de fluide d'extension du cycle supplémentaires pour maintenir les températures de combustion sous les seuils de référence pour la durée de vie élevée.

9. Procédé selon la revendication 8, caractérisé en ce que le fluide de travail est de l'oxygène pur combiné avec des injections de carburant répétées et caractérisé également par des injections de fluide d'extension du cycle destinées à maintenir les températures de combustion sous les seuils de référence pour la durée de vie élevée du moteur.

10. Procédé selon l'une ou l'autre des revendications 1 à 9, caractérisé en ce que le fluide d'extension de cycle est enrichi par une additif faible composé par exemple de 0,01 % d'H₂O₂, d'O₃, de péroxydes organiques ou d'autres substances oxydantes, et ce afin de nettoyer les gaz d'échappement.

11. Procédé selon l'une ou l'autre des revendications 1 à 10 et caractérisé en ce que le fluide d'extension de cycle est enrichi avec un additif fort composé de H₂O₂, d'O₃, de péroxydes organiques ou d'autres substances oxydantes, afin d'accroître encore le rapport de puissance, et caractérisé en ce que une partie de la substance oxydante est introduite dans le cycle par l'intermédiaire du fluide d'extension du cycle.

12. Procédé selon l'une ou l'autre des revendications 1 à 11, caractérisé en ce que le fluide d'extension du cycle est remplacé par des combustibles solubles ou dispersants, ainsi que par un allumage par charge concentrée de combustibles et par la combustion du combustible dilué dans un environnement de fluide d'extension du cycle.

13. Procédé selon l'une ou l'autre des revendications 1 à 12, caractérisé par l'utlisation d'un système de récupération du fluide d'extension du cycle dans le tuyau d'échappement, par la condensation de ce même fluide, par la neutralisation d'une bonne partie des impuretés en forme de particules et solubles dans le fluide, et par le fait qu'une bonne part d'entre elles sont détruites pendant la combustion, lors de leur réintégration dans le cycle.

14. Moteur à combustion interne avec allumage commandé pour réaliser le procédé selon l'une ou l'autre des revendications 1 à 13, et avec
a) au moins une chambre d'explosion (1) avec cylindres et pistons à mouvement de va-et-vient ou rotatif (2, 3),
b) un dispositif d'alimentation (4, 8) pour alimenter le carburant premier sous la forme d'essence, de gasoil, de gaz ou d'un carburant analogue, à l'aide d'un dispositif de carburation (8),
c) un dispositif (4) servant à injecter un gaz d'alimentation comme l'air et / ou un gaz équivalent supportant le processus de combustion dans la chambre de combustion (1), avec un dispositif d'admission (5),
d) un dispositif d'allumage (9) permettant d'allumer à intervalles de temps réguliers le mélange comprimé de carburant et de gaz dans la chambre de combustion (1),
e) un dispositif d'évacuation des gaz d'échappement (6, 7) avec dispositif d'échappement (6) et conduite d'évacuation des gaz d'échappement (7),
et **caractérisé par**
f) un dispositif d'admission (12, 13, 16, 17, 10) pour l'injection d'un fluide d'extension du cycle (FEC) sous forme liquide, gazeuse ou mixte dans la chambre de combustion (1), par l'intermédiaire d'un injecteur (10) conçu de telle manière à ce que, si le fluide d'extension du cycle est de l'eau, les valeurs d'injection soient 1,5 à 20 fois supérieures à la quantité totale de carburant utilisée,
g) un dispositif d'admission supplémentaire (11) pour injecter des quantités supplémentaires de carburant secondaire dans la chambre de combustion (1) par l'intermédiaire d'injecteurs secondaires (11), et
h) un système de contrôle des temps d'allumage et d'injection du moteur, ainsi que des quantités injectées conformément aux conditions de charge respectives.

15. Moteur à combustion interne avec auto-allumage en vue de réaliser un procédé selon l'une ou l'autre des revendications 1 à 13, comprenant
a) au moins une chambre d'explosion (1) avec cylindre et pistons à mouvement de va-et-vient ou rotatif (2, 3),
b) un dispositif d'admission (20) destiné à l'injection de carburant primaire sous la forme de gasoil ou d'un carburant analogue,
c) un dispositif (4) servant à injecter un gaz d'alimentation comme l'air et / ou un gaz équivalent supportant le processus de combustion dans la chambre de combustion (1), avec un dispositif d'admission (5),
d) un dispositif d'évacuation des gaz d'échappement (6, 7) avec dispositif d'échappement (6) et conduite d'évacuation des gaz d'échappement (7),
et **caractérisé par**
e) un dispositif d'admission (12, 13, 16, 17, 10) pour l'injection d'un fluide d'extension du cycle (FEC) sous forme liquide, gazeuse ou mixte dans la chambre de combustion (1), par l'intermédiaire d'un injecteur (10) conçu de telle manière à ce que, si le fluide d'extension du cycle est de l'eau, les valeurs d'injection soient 1,5 à 20 fois supérieures à la quantité totale de carburant utilisée,
f) un dispositif d'admission supplémentaire (11) pour injecter des quantités supplémentaires de carburant secondaire dans la chambre de combustion (1) par l'intermédiaire d'injecteurs secondaires (11), et
g) un système de contrôle des temps d'allumage et d'injection du moteur, ainsi que des quantités injectées conformément aux conditions de charge respectives.

16. Moteur à combustion interne et turbine pour réaliser un procédé selon l'une ou l'autre des revendications 1 à 13, comprenant
a) au moins une chambre de combustion (24), la compression étant assurée par des turbines rotatives à un ou plusieurs étage(s) (21, 22) et l'expansion (récupération de l'énergie) passant par des turbines rotatives à un ou plusieurs étage(s) (27, 28),
b) un premier dispositif d'alimentation (26) destiné à l'injection de carburant primaire sous forme de diesel, d'huile, de gaz ou apparentés, et comprenant un dispositif de mélange,
c) un dispositif destiné à injecter le gaz d'alimentation sous forme d'air et / ou d'un gaz analogue supportant le processus de combustion, à l'aide d'aubes directrices réglables au premier niveau et séparées de la chambre de combustion par la turbine de compression (21, 22),
d) un premier dispositif (9) destiné à allumer le mélange comprimé de carburant et de gaz dans la chambre de combustion,
e) un dispositif d'évacuation des gaz d'échappement (29) séparé de la chambre de combustion par les turbines d'expansion (27, 28),
et caractérisé par
f) un dispositif (37, 33, 34, 23, 30, 31) destiné à injecter le fluide d'extension du cycle (FEC) sous forme liquide, gazeuse ou mixte dans les chambres de combustion (24) situées à l'intérieur ou à l'extérieur de la zone de combustion, par l'intermédiaire d'au moins un injecteur (31) conçu de temme manière à ce que les valeurs d'injection d'eau totales soient 1,5 à 20 fois supérieures à la quantité totale de carburant utilisée,
g) au moins une chambre de combustion supplémentaire (24) avec dispositif pour injecter des quantités supplémentaires de carburant secondaire dans la chambre de combustion (26) par l'intermédiaire d'injecteurs secondaires, et avec un dispositif d'allumage (9).

17. Moteur à combustion interne selon l'une ou l'autre des revendications 14, 15 ou 16, caractérisé en ce que le dispositif d'injection du FEC (10, 31) est alimenté à partir d'une chambre de carburation FEC (13, 33) par l'intermédiaire d'une pompe d'injection (16, 34).

18. Moteur à combustion interne selon l'une ou l'autre des revendications 14 à 17, caractérisé en ce que le FEC (12, 37), le péroyde et le carburant sont amenés hors du réservoir FEC (12, 37) par l'intermédiaire d'une chambre de carburation (13, 33) et injecté le cas échéant via un échangeur thermique (17, 30).

19. Moteur à combustion interne selon l'une ou l'autre des revendications 14 à 18, caractérisé en ce que l'orifice d'admission (5) présente au moins une turbine de compression (21, 22) et l'orifice d'échappement (6) au moins une turbine d'expansion (27, 28).

20. Moteur à combustion interne selon l'une ou l'autre des revendications 14 à 19, caractérisé en ce que un refroidisseur intermédiaire de gaz d'alimentation (23) et / ou un échangeur thermique (17, 30) a / ont été prévu(s) pour préchauffer le fluide d'extension du cycle.

21. Moteur à combustion interne selon l'une ou l'autre des revendications 14 à 20, caractérisé en ce que des injecteurs de carburant supplémentaires (11) ont été prévus dans la chambre de combustion (1), afin d'injecter de l'énergie supplémentaire dans le cycle.

22. Moteur à combustion interne selon l'une ou l'autre des revendications 14 à 21, caractérisé en ce que l'air aspiré dans le dispositif d'admission de gaz (4) est complété par de l'air de combustion enrichi à l'oxygène ou par de l'oxygène pur.
